(19) **Europäisches Patentamt / European Patent Office / Office européen des brevets**

(11) **EP 2 966 526 B1**

(12) **FASCICULE DE BREVET EUROPÉEN**

(45) Date de publication et mention de la délivrance du brevet:
**11.01.2017 Bulletin 2017/02**

(51) Int Cl.:
**G05B 23/02** (2006.01)

(21) Numéro de dépôt: **15174428.1**

(22) Date de dépôt: **30.06.2015**

(54) **PROCÉDÉ ET SYSTÈME DE FUSION D'INDICATEURS DE SURVEILLANCE D'UN DISPOSITIF**

VERFAHREN UND SYSTEM ZUR ZUSAMMENFÜHRUNG VON ÜBERWACHUNGSINDIKATOREN EINER VORRICHTUNG

A METHOD AND A SYSTEM FOR MERGING HEALTH INDICATORS OF A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2014 FR 1401544**

(43) Date de publication de la demande:
**13.01.2016 Bulletin 2016/02**

(73) Titulaire: **Airbus Helicopters**
**13725 Marignane Cedex (FR)**

(72) Inventeur: **MOUTERDE, Joël**
**13001 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 2 204 778**      **US-A1- 2005 096 873**
**US-A1- 2008 082 299**      **US-A1- 2014 149 325**
**US-B1- 6 564 119**

Remarques:
Le dossier contient des informations techniques présentées postérieurement au dépôt de la demande et ne figurant pas dans le présent fascicule.

## Description

La présente invention concerne le domaine de surveillance du fonctionnement d'un dispositif. La présente invention concerne notamment un procédé de fusion d'indicateurs de surveillance d'un dispositif ainsi qu'un moyen de mise en oeuvre de ce procédé.

La présente invention est plus particulièrement destinée à la surveillance du fonctionnement d'un aéronef à voilure tournante et de différents dispositifs qu'il comporte. Par exemple, le procédé selon l'invention s'applique à la surveillance d'un mécanisme de transmission de puissance mécanique inséré entre au moins un moteur thermique et au moins un rotor de cet aéronef ou bien à la surveillance d'un moteur thermique.

La surveillance et la détection de la présence d'un défaut au sein d'un dispositif ou bien du risque d'apparition d'un défaut a fait l'objet de nombreuses recherches.

Notamment, les systèmes de surveillance désignés par l'acronyme *HUMS* pour « Health and Usage Monitoring System » en langue anglaise ont pour but de surveiller un ou plusieurs dispositifs généralement dynamiques par l'intermédiaire de différents capteurs en suivant l'évolution d'un ensemble d'indicateurs de surveillance. Ces indicateurs de surveillance sont activés à partir des mesures d'un ou plusieurs capteurs afin de caractériser l'état et le fonctionnement de chaque dispositif. Par exemple, un indicateur de surveillance peut être défini par un signal combinant les signaux de plusieurs capteurs. Plusieurs indicateurs de surveillance peuvent également concerner les mesures d'un seul et même capteur à travers diverses caractéristiques du signal fourni par ce capteur, tel son spectre fréquentiel ou bien un signal temporel. Par exemple, un indicateur de surveillance est constitué par l'amplitude maximum d'un signal temporel fourni par un accéléromètre.

L'évolution de chaque indicateur de surveillance est comparée respectivement à un seuil de détection de défauts correspondant à cet indicateur de surveillance afin de détecter la présence éventuelle d'un défaut ou d'une panne du dispositif surveillé ou bien un risque d'apparition d'un tel défaut ou encore d'une telle panne. La valeur de chaque seuil de détection de défauts peut être déterminée par l'expérience, par une analyse statistique sur l'historique de la flotte en exploitation pour un type d'aéronefs et un système *HUMS* donné ou bien par un apprentissage individuel sur un aéronef donné.

Un tel seuil de détection de défauts est généralement un seuil minimum ou bien un seuil maximum. S'il s'agit d'un seuil maximum, tant que l'indicateur de surveillance est inférieur à ce seuil maximum, aucune présence ou aucun risque d'apparition d'un défaut ou bien d'une panne n'est détecté. Par contre, lorsque l'indicateur de surveillance est supérieur ou égal à ce seuil maximum, une présence ou un risque d'apparition d'un défaut ou bien d'une panne est détecté. A contrario, s'il s'agit d'un seuil minimum, tant que l'indicateur de surveillance est supérieur à ce seuil minimum, aucune présence ou aucun risque d'apparition d'un défaut ou bien de panne n'est détecté. Par contre, lorsque l'indicateur de surveillance est inférieur ou égal à ce seuil minimum, une présence ou un risque d'apparition d'un défaut ou bien d'une panne est détecté.

On considère par hypothèse pour la suite de la description par souci de simplification qu'un seuil de détection de défauts est un seuil maximum.

Ce seuil de détection de défauts peut être une valeur constante, mais il peut également être variable suivant divers paramètres dont éventuellement au moins un autre indicateur de surveillance du dispositif surveillé.

Ce seuil de détection de défauts peut également être un seuil double formé d'une limite inférieure et d'une limite supérieure constituant ainsi un intervalle. La présence d'un défaut peut alors être détectée lorsque l'indicateur de surveillance se trouve généralement à l'extérieur de l'intervalle.

De plus, un seuil de détection de défauts peut également être variable en fonction du temps au cours du fonctionnement du dispositif surveillé.

Par exemple, un seuil de détection de défauts, qui peut alors être désigné par l'expression « seuil appris », est calculé en utilisant un historique du fonctionnement du dispositif surveillé, cet historique étant déterminé au cours d'une période d'apprentissage, le dispositif étant sain. Pendant cette période d'apprentissage, le seuil de détection de défauts est égal à une valeur constante prédéterminée, le seuil appris étant ensuite borné par cette valeur constante prédéterminée.

Un seuil de détection de défauts peut également être un « seuil glissant », qui est déterminé sur un premier intervalle de temps et utilisé sur un second intervalle de temps, Ce seuil glissant peut évoluer ainsi tout au long du fonctionnement du dispositif surveillé.

Par exemple, le document US2005/0096873 décrit une méthode de diagnostic d'un système mécanique par analyse vibratoire. Cette méthode traite des signaux vibratoires sur une large bande de fréquences provenant de divers capteurs. Ces signaux sont ensuite comparés avec des signaux comportant des défauts connus afin de déterminer l'état courant du système mécanique. De plus, les signaux vibratoires peuvent être combinés avec des informations opérationnelles telles que des températures de composants ou bien la fréquence de rotation d'un arbre de transmission de mouvement par exemple.

On connaît également le document FR2972025 qui décrit un procédé de prévision des opérations de maintenance d'un moteur d'aéronef. Ce procédé exploite une base de données contenant les retours d'expériences sur les causes des défaillances de tels moteurs et les niveaux d'intervention nécessaires pour leur réparation. Cette base de données contient également des données de ces moteurs telles que le type de moteur, son niveau de vieillissement par exemple. Un modèle de défaillance statistique modélisant les causes de défaillance et adapté à chaque type de moteurs peut alors être défini et caractérisé par une courbe de probabilité cumulée de défaillance en fonction du temps. Cette courbe est basée sur une loi de « Weibull » et des règles de décision du niveau d'intervention sont associées à ce modèle de défaillance en fonction de paramètres relatifs à chaque moteur.

Par ailleurs, le document US2009/0281735 décrit un procédé de détermination d'une date future de réalisation d'une opération de maintenance sur un composant ou bien un sous-système. Cette date future est définie à partir d'un indicateur d'état déterminé à un instant donné et d'une valeur matérielle déterminée à partir d'un taux de variation de cet indicateur d'état sur une période de temps. Cette date future peut être définie par un nombre de cycles à effectuer avant la réalisation d'une opération de maintenance.

De plus, le document US2011/0173496 décrit une méthode de diagnostic au cours de laquelle on définit une base de données à partir des données historiques de variables sélectionnées d'un ou plusieurs composants. Ensuite, on calcule des caractéristiques spécifiques à partir de cette base de données et des hypothèses sur l'état de fonctionnement de ces composants sont déterminées en évaluant ces caractéristiques spécifiques. Enfin, on définit un état actuel des composants selon chaque hypothèse et on en déduit d'éventuelles opérations de maintenance préventive.

Par ailleurs, l'arrière plan technologique du domaine de surveillance du fonctionnement d'un dispositif comporte les documents US2008/0082299, EP2204778, US6564119 et US2014/0149325.

De tels systèmes de surveillance rendent ainsi possible la maîtrise des modes de dégradation des ensembles mécaniques en surveillant leur état de fonctionnement en temps réel afin d'anticiper et de détecter d'éventuels défauts ou pannes. La mise en place d'un tel système de surveillance permet de maîtriser les risques d'apparition de pannes techniques en vol et de différer ou bien d'anticiper les tâches de maintenance. De la sorte, les coûts de maintenance peuvent être diminués et la disponibilité du matériel pour le client peut être augmentée.

Cependant, les indicateurs de surveillance doivent être nombreux, de l'ordre de plusieurs centaines, pour surveiller de façon efficace et fiable l'ensemble d'un véhicule tel qu'un aéronef à voilure tournante. De fait, le suivi de ces indicateurs de surveillance par un opérateur peut être complexe.

Afin de faciliter ce travail de l'opérateur et d'améliorer son efficacité, plusieurs indicateurs de surveillance peuvent être fusionnés pour former un indicateur fusionné souvent désigné par l'acronyme « HI » correspondant à l'expression en langue anglaise « Health Indicator ».

Plusieurs méthodes de fusion d'indicateurs de surveillance ont été développées. Par exemple, des indicateurs de surveillance liés à un composant ou bien à un sous-système mécanique sont regroupés au sein d'un groupe d'indicateurs. Chaque groupe d'indicateurs permet alors de calculer un indicateur fusionné HI. Cet indicateur fusionné *HI* est ensuite comparé à un seuil d'alarme et permet ainsi de détecter un comportement anormal de ce composant ou bien de ce sous-système mécanique. Un tel sous-système mécanique est par exemple un moteur ou bien un mécanisme de transmission de puissance mécanique ou électrique.

De telles méthodes de fusion apportent deux avantages principaux dans le domaine de surveillance du fonctionnement d'un dispositif. Tout d'abord, le nombre d'indicateurs suivis par un opérateur est réduit, par exemple de plusieurs centaines d'indicateurs de surveillance à quelques dizaines d'indicateurs fusionnés *HI* pour un véhicule complet. Ensuite, les performances de détection sont améliorées grâce à des informations supplémentaires obtenues par corrélation entre plusieurs indicateurs de surveillance, de telles informations supplémentaires ne pouvant être obtenues en analysant les indicateurs de surveillance unitairement et indépendamment.

En général, de telles méthodes de fusion utilisent une période d'apprentissage pendant laquelle sont collectées des valeurs des indicateurs de surveillance alors que l'élément surveillé est sain et fonctionne correctement. Un nuage de points de fonctionnement représenté par ces valeurs des indicateurs de surveillance peut ensuite être modélisé dans un espace des indicateurs de surveillance pour représenter l'état sain de cet élément et permettre ainsi de déterminer un modèle représentatif de l'état sain de cet élément. Un indicateur fusionné *HI* peut être défini pour représenter le positionnement d'un point de fonctionnement quelconque de cet espace des indicateurs de surveillance par rapport à ce modèle représentatif de l'état sain de cet élément. Cet indicateur fusionné *HI* peut par exemple être caractérisé par une distance entre ce point de fonctionnement et le centre de ce modèle représentatif de l'état sain de cet élément. Un tel indicateur fusionné *HI* peut ensuite être comparé avec un seuil d'alarme *Sa* égal à la distance entre ce centre et la frontière de ce modèle représentatif de l'état sain de cet élément.

Par exemple, le document US2008/0208487 décrit une méthode d'estimation de la durée de vie restante d'un composant ou bien d'un sous-système en fusionnant plusieurs modèles de détermination de cette durée de vie restante. Ce procédé permet de combiner d'une part les résultats de ces méthodes ainsi que des informations redondantes de ces modèles afin d'améliorer la précision et la fiabilité de l'estimation de la durée de vie restante de ce composant ou bien de ce sous-système.

Malgré les améliorations citées précédemment, de telles méthodes de fusion ne permettent pas de garantir seules une détection de tous les cas qui seraient détectés par une méthode classique de surveillance dans laquelle les indicateurs de surveillance sont comparés indépendamment et unitairement à leurs seuils respectifs. En effet, le modèle représentatif de l'état sain de cet élément déterminé par une telle méthode de fusion peut couvrir dans l'espace des indicateurs de surveillance une zone allant au-delà du seuil de détection de défauts d'un ou plusieurs indicateurs de surveillance, ne déclenchant alors pas d'alarme lorsque ce seuil de détection de défauts est dépassé.

Il est alors nécessaire d'imposer des contraintes supplémentaires à la méthode de fusion afin de supprimer ces risques de non-détection, mais ces contraintes supplémentaires peuvent alors générer un fort taux de fausses alarmes.

Il est également possible de combiner une comparaison d'une part entre l'indicateur fusionné $HI$ et son seuil d'alarme et d'autre part entre un ou plusieurs indicateurs de surveillance et leur seuil de détection de défauts respectif. Cependant, une telle technique est alors plus complexe que la comparaison unitaire de chaque indicateur de surveillance à son seuil de détection de défauts respectif. De plus, une telle technique présente plusieurs inconvénients, notamment d'une part des incohérences possibles entre les alarmes sur les indicateurs de surveillance et les alarmes sur l'indicateur fusionné $HI$ et d'autre part la nécessité de continuer à surveiller unitairement les indicateurs de surveillance.

La présente invention a alors pour objet de proposer un procédé et un système de fusion d'indicateurs de surveillance d'un dispositif permettant de s'affranchir des limitations mentionnées ci-dessus. La présente invention est destinée à la surveillance d'un ou de plusieurs dispositifs ainsi qu'éventuellement d'un regroupement de dispositifs et plus particulièrement la surveillance du fonctionnement de dispositifs équipant un aéronef à voilure tournante.

Selon l'invention, un procédé de fusion d'indicateurs de surveillance d'un dispositif est destiné à la surveillance de ce dispositif et plus particulièrement à la surveillance de son fonctionnement en combinant l'utilisation de seuils de détection correspondant à des indicateurs de surveillance et un seuil d'alarme correspondant à la fusion d'indicateurs de surveillance.

Des capteurs de mesures sont positionnés sur ce dispositif et/ou à proximité de ce dispositif, des mesures d'au moins un de ces capteurs permettant de déterminer un indicateur de surveillance $Indi,$ chaque indicateur de surveillance $Indi$ étant associé à un seuil de détection $Sd_i$.

Selon ce procédé de fusion d'indicateurs de surveillance d'un dispositif,

- au cours d'une étape préliminaire, on répartit les indicateurs de surveillance $Ind_i$ du dispositif dans au moins un groupe d'indicateurs G, un algorithme $g$ étant appliqué aux indicateurs de surveillance $Ind_i$ d'un groupe d'indicateurs $G$ pour déterminer un point de fonctionnement caractéristique $Pf$ du dispositif pour le groupe d'indicateurs G,

- au cours d'une étape d'apprentissage, on détermine un modèle représentatif $Mr$ de l'état sain du dispositif et une fonction d'appartenance $f$ d'un point de fonctionnement caractéristique $Pf$ du dispositif au modèle représentatif $Mr$ de l'état sain du dispositif pour le groupe d'indicateurs $G$ ainsi qu'un seuil d'alarme $Sa$ du modèle représentatif $Mr$ à partir de points de fonctionnement d'apprentissage,

- au cours d'une étape de prise en compte des seuils de détection $Sd_i,$ on détermine une transformation $T$ de la fonction d'appartenance $f$ afin de prendre en compte d'une part le seuil d'alarme $Sa$ du modèle représentatif $Mr$ et d'autre part les seuils de détection $Sd_i$ des indicateurs de surveillance $Ind_i$ du groupe $G,$

- au cours d'une étape de surveillance,

   ∘ on détermine les indicateurs de surveillance $Ind_i$ d'un groupe d'indicateurs $G,$

   ∘ on détermine l'indicateur fusionné $HI$ en appliquant la transformation $T$ de la fonction d'appartenance $f$ aux indicateurs de surveillance $Ind_i$ du groupe d'indicateurs G du dispositif,

   o on compare l'indicateur fusionné $HI$ au seuil d'alarme $Sa$ et

   o on en déduit un état de fonctionnement du dispositif.

Les indicateurs de surveillance permettent de surveiller un ou plusieurs dispositifs, voire un regroupement de dispositifs, par l'intermédiaire de différents capteurs positionnés sur un ou plusieurs dispositifs et/ou à proximité de ce(s) dispositif(s).

Comme évoqué préalablement, les indicateurs de surveillance nécessaires à une bonne surveillance d'un dispositif peuvent être très nombreux. Il peut donc être intéressant de réduire le nombre d'indicateurs de surveillance que doit suivre un opérateur afin de faciliter ce travail de surveillance et d'améliorer son efficacité.

De fait, les indicateurs de surveillance sont tout d'abord répartis dans différents groupes d'indicateurs au cours d'une étape préliminaire afin de permettre de calculer un point de fonctionnement caractéristique *Pf* d'un dispositif voire d'un regroupement de dispositifs. Chaque groupe d'indicateurs est ainsi associé au dispositif ou au regroupement de dispositifs surveillés. En outre, un indicateur de surveillance peut faire partie de plusieurs groupes d'indicateurs.

Le point de fonctionnement caractéristique *Pf pour* un groupe d'indicateurs est déterminé en appliquant aux indicateurs de surveillance de ce groupe d'indicateurs un algorithme prédéfini et spécifique à chaque groupe d'indicateurs. Ce point de fonctionnement caractéristique *Pf* permet alors de caractériser ce dispositif ou bien ce regroupement de dispositifs et, par suite, de définir un état de fonctionnement de ce dispositif ou bien de ce regroupement de dispositifs. De la sorte, la présence d'un défaut ou bien d'une panne ou le risque d'une telle apparition de panne peut être détectée.

Un tel algorithme *g* permettant de déterminer le point de fonctionnement caractéristique *Pf* à partir des indicateurs de surveillance est par exemple un algorithme de normalisation des données de ces indicateurs de surveillance.

De tels dispositifs peuvent équiper un aéronef à voilure tournante et être constitués par exemple par un mécanisme de transmission de puissance mécanique ou bien un moteur. Chaque groupe d'indicateurs est généralement déterminé lors de la conception du dispositif ou bien de l'aéronef à voilure tournante comportant le dispositif. Chaque groupe d'indicateurs peut également être déterminé sur un dispositif ou bien sur un aéronef existant, à partir des indicateurs de surveillance de ce dispositif ou bien de cet aéronef.

Les indicateurs de surveillance d'un dispositif peuvent être calculés pendant le fonctionnement du dispositif ou bien après une phase de fonctionnement de ce dispositif. De même, dans le cas où le dispositif surveillé équipe un aéronef à voilure tournante, les indicateurs de surveillance de ce dispositif peuvent être calculés au cours d'un vol de l'aéronef ou bien après un vol de l'aéronef.

Par exemple, les indicateurs de surveillance sont calculés après un vol de l'aéronef et au sol par l'intermédiaire d'un ou plusieurs calculateurs extérieurs à l'aéronef.

Chaque indicateur de surveillance est déterminé à partir de mesures d'un ou plusieurs capteurs. Chaque indicateur de surveillance est ainsi représenté par un signal qui peut être continu, c'est-à-dire analogique, ou bien discrétisé, c'est à dire numérique.

Pour calculer chaque indicateur de surveillance, on acquiert par exemple au moins une mesure issue d'un ou plusieurs capteurs positionnés sur un dispositif ou à proximité de ce dispositif. Les mesures de ce(s) capteur(s) constituent un signal correspondant à un signal vibratoire, un signal sonore, une température ou bien une pression par exemple.

De plus, un seuil de détection de défauts est associé à chaque indicateur de surveillance. Comme évoqué précédemment, on considère que ce seuil de détection est un seuil maximum, bien qu'il puisse également être un seuil minimum ou bien un seuil double formé par un intervalle.

Ensuite, au cours d'une étape d'apprentissage, on détermine le modèle représentatif *Mr* de l'état sain du dispositif et la fonction d'appartenance *f* d'un point de fonctionnement caractéristique *Pf* du groupe d'indicateurs à ce modèle représentatif *Mr* ainsi qu'un seuil *d'alarme Sa* du modèle représentatif *Mr* à partir d'indicateurs de surveillance d'apprentissage.

Cette étape d'apprentissage peut comporter plusieurs sous-étapes au cours desquelles,

- on détermine des indicateurs de surveillance d'apprentissage du groupe d'indicateurs pour un dispositif sain,

- on détermine des points de fonctionnement d'apprentissage du dispositif en appliquant aux indicateurs de surveillance d'apprentissage l'algorithme *g* prédéfini et spécifique à ce groupe d'indicateurs,

- on détermine le modèle représentatif *Mr* de l'état sain du dispositif à partir de ces points de fonctionnement d'apprentissage du dispositif,

- on détermine la fonction d'appartenance *f* d'un point de fonctionnement caractéristique *Pf* du dispositif au modèle représentatif de l'état sain du dispositif pour le groupe d'indicateurs à partir des indicateurs de surveillance d'apprentissage de ce groupe d'indicateurs et

- on détermine un seuil d'alarme *Sa* associé à la fonction d'appartenance *f*, le seuil d'alarme *Sa* étant égal à un critère d'appartenance d'un point de fonctionnement caractéristique limite se trouvant sur une frontière du modèle représentatif *Mr* de l'état sain du dispositif, le critère d'appartenance étant déterminé en appliquant la fonction d'appartenance *f* aux indicateurs de surveillance correspondant à ce point de fonctionnement caractéristique limite du dispositif pour le groupe d'indicateurs.

On entend par «frontière du modèle représentatif *Mr* » la séparation définie par ce modèle représentatif *Mr* entre des points de fonctionnement correspondant à une absence de défaut sur le dispositif surveillé et des points de fonctionnement correspondant à une présence ou à un risque d'apparition d'un défaut sur ce dispositif.

Cette frontière du modèle représentatif *Mr* peut être par exemple déterminée de manière statistique.

Ce seuil *d'alarme Sa* correspond ainsi à la limite d'appartenance d'un point de fonctionnement caractéristique *Pf* au modèle représentatif *Mr* pour le groupe d'indicateurs.

On entend généralement comme « dispositif sain », un dispositif qui fonctionne correctement, sans présence de défaut.

Cette étape d'apprentissage est généralement réalisée au cours des essais de validation du dispositif ou bien de l'aéronef comportant le dispositif surveillé, sur un dispositif neuf après avoir subi une éventuelle période de rodage ayant permis de valider son fonctionnement correct. Cette étape d'apprentissage peut également être réalisée de nouveau après une opération de maintenance ou bien de réparation effectuée sur le dispositif surveillé ainsi que suite à une modification de ce dispositif ou bien de son environnement.

Cette étape d'apprentissage permet ainsi de déterminer un ensemble de points de fonctionnement d'apprentissage du dispositif en appliquant l'algorithme *g* aux indicateurs de surveillance de ce groupe d'indicateurs. Cet ensemble de points de fonctionnement d'apprentissage peut être représenté sous la forme d'un nuage de points de fonctionnement d'apprentissage du dispositif dans un espace formé par les indicateurs de surveillance de ce groupe d'indicateurs.

Ce nuage étant formé de points de fonctionnement d'apprentissage correspondant à un dispositif sain peut alors être modélisé par un modèle représentatif *Mr* de l'état sain du dispositif dans cet espace formé par les indicateurs de surveillance de ce groupe d'indicateurs.

Ce modèle représentatif *Mr* de l'état sain du dispositif peut être défini par un modèle paramétrique. On appelle « modèle paramétrique » une expression analytique qui permet de modéliser ce nuage.

Il existe des formules paramétriques connues, telles que la loi gaussienne, la loi de « Poisson » ou bien la distribution de « Weibull ». On choisira d'appliquer la formule la plus adaptée au nuage de points de fonctionnement d'apprentissage en fonction de la forme de ce nuage ainsi que de la répartition et de la densité des points de fonctionnement d'apprentissage dans le nuage.

Ce modèle représentatif *Mr* de l'état sain du dispositif peut ainsi être modélisé par un seul modèle paramétrique multidimensionnel dans l'espace formé par les indicateurs de surveillance de ce groupe d'indicateurs si la répartition des points de fonctionnement d'apprentissage est régulière.

On entend par une répartition « régulière » une répartition dont tous les points sont regroupés en un seul nuage.

Dans le cas contraire, le nuage des points de fonctionnement d'apprentissage peut être décomposé en sous-ensembles réguliers, le modèle représentatif *Mr* pouvant alors être modélisé par une superposition de plusieurs modèles paramétriques multidimensionnels dans ce même espace. En outre, une superposition de modèles paramétriques peut généralement être modélisée par un seul modèle paramétrique.

Dans tous les cas, que le modèle représentatif *Mr* soit formé par un seul modèle paramétrique multidimensionnel ou bien par une superposition de modèles paramétriques multidimensionnels, ce ou ces modèles paramétriques multidimensionnels sont de dimensions égales au nombre d'indicateurs de surveillance formant le groupe d'indicateurs.

Par exemple, le modèle représentatif *Mr* de l'état sain du dispositif peut être modélisé par une seule fonction gaussienne multidimensionnelle ou bien par une superposition de fonctions gaussiennes multidimensionnelles désignée par l'acronyme *« GMM »* correspondant à la désignation en langue anglaise « Gaussian Mixture Model ». De plus, chaque fonction gaussienne multidimensionnelle peut être pondérée suivant la répartition et la densité des points de fonctionnement d'apprentissage dans ce nuage de points.

D'autres techniques peuvent également être utilisées pour modéliser le modèle représentatif *Mr* de l'état sain du dispositif, comme par exemple les cartes auto-organisatrices, dites également cartes de « Kohonen ». Ces techniques permettent à la fois de définir le modèle représentatif *Mr et* la fonction d'appartenance *f.*

Ce modèle représentatif *Mr* de l'état sain du dispositif permet alors définir qu'un point de fonctionnement caractéristique *Pf* du groupe d'indicateurs situé à l'intérieur de la frontière de ce modèle représentatif *Mr* correspond à un dispositif sain sans défaut alors qu'un point de fonctionnement caractéristique *Pf* du groupe d'indicateurs situé à l'extérieur de cette frontière ou bien sur cette frontière correspond à un dispositif comportant un défaut ou avec un risque d'apparition d'un défaut.

Par ailleurs, la fonction d'appartenance f permet de définir un critère d'appartenance au modèle représentatif *Mr* pour tout point de fonctionnement caractéristique *Pf.* Ce critère d'appartenance peut être un critère de positionnement de ce point de fonctionnement caractéristique *Pf* par rapport au modèle représentatif *Mr.* Pour définir cette fonction d'appartenance *f*, l'utilisation de modèles statistiques est particulièrement bien adaptée car ils permettent de définir assez facilement un critère de positionnement d'un point par rapport au modèle représentatif *Mr.*

La fonction d'appartenance *f* est appliquée de préférence directement aux indicateurs de surveillance de ce groupe d'indicateurs afin de définir le critère d'appartenance du point de fonctionnement caractéristique *Pf* correspondant à ces indicateurs de surveillance *Indi.* De fait, la fonction d'appartenance *f* contient l'algorithme *g* permettant de définir ce point de fonctionnement caractéristique *Pf* à partir de ces indicateurs de surveillance *Indi.*

Cependant, cette fonction d'appartenance *f* peut également être appliquée au point de fonctionnement caractéristique *Pf* préalablement déterminé en appliquant l'algorithme *g* aux indicateurs de surveillance $Ind_i$ de ce groupe d'indicateurs *G.*

Ce critère d'appartenance peut ainsi être comparé au seuil d'alarme *Sa* afin de déterminer la position de ce point de fonctionnement caractéristique *Pf* par rapport à la frontière de ce modèle représentatif *Mr* et, par suite, s'il y a présence ou risque d'apparition d'un défaut sur le dispositif surveillé.

Par exemple, ce seuil d'alarme *Sa* étant un seuil maximum, si le critère d'appartenance correspondant à un point de fonctionnement caractéristique *Pf* est inférieur au seuil d'alarme *Sa,* ce point de fonctionnement caractéristique *Pf* est à l'intérieur du modèle représentatif *Mr* et caractérise un dispositif sain ne présentant aucun défaut ou risque d'apparition d'un défaut.

Inversement, si le critère d'appartenance correspondant à ce point de fonctionnement caractéristique *Pf* est supérieur ou égal au seuil d'alarme *Sa,* ce point de fonctionnement caractéristique *Pf* est à l'extérieur du modèle représentatif *Mr* ou bien sur la frontière de ce modèle représentatif *Mr* et caractérise un dispositif susceptible de présenter un défaut ou bien un risque d'apparition d'un défaut.

Si le modèle représentatif *Mr* est régulier et qu'un centre de ce modèle représentatif *Mr* peut être défini, le critère d'appartenance peut être une distance entre ce point de fonctionnement caractéristique *Pf* et le centre de ce modèle représentatif *Mr,* le seuil d'alarme *Sa* étant la distance entre ce centre du modèle représentatif *Mr* et la frontière du modèle représentatif *Mr.* Ce seuil d'alarme *Sa* peut alors être variable, la distance entre le centre et la frontière du modèle représentatif *Mr* n'étant généralement pas constante autour de ce centre.

Si le modèle représentatif *Mr* est modélisé par une seule fonction gaussienne multidimensionnelle, la distance de « Mahalanobis » est particulièrement adaptée pour définir l'appartenance ou non d'un point de fonctionnement caractéristique *Pf* au modèle représentatif *Mr.* La fonction d'appartenance *f* peut alors être une fonction déterminant cette distance de « Mahalanobis ».

La distance de « Mahalanobis » caractérisant un point est la distance entre ce point et le centre de la fonction gaussienne, en prenant en compte la répartition définie par cette fonction gaussienne autour de ce centre. Ainsi, la distance de « Mahalanobis » prend en compte les variances et covariances de la fonction gaussienne selon la direction définie par son centre et ce point. De fait, la distance de « Mahalanobis » entre le centre et la frontière du modèle représentatif *Mr* est constante autour de ce centre alors que la distance « euclidienne » équivalente entre ce centre et la frontière du modèle représentatif *Mr* peut être variable autour de ce centre.

Pour le cas particulier dans lequel ce modèle représentatif *Mr* correspond à un modèle avec une répartition identique dans chaque direction de l'espace formé par les indicateurs de surveillance, la distance de « Mahalanobis » est alors égale à la distance « euclidienne ». En effet, la répartition autour du centre de ce modèle représentatif *Mr* est uniforme et le seuil d'alarme *Sa* correspondant à cette distance euclidienne est alors constant.

Dans ce cas particulier, un tel modèle représentatif *Mr* uniforme est représenté par un cercle dans un espace à deux dimensions formé de deux indicateurs de surveillance ou bien une sphère dans un espace à trois dimensions formé de trois indicateurs de surveillance.

A contrario, le modèle représentatif *Mr* modélisé par une seule fonction gaussienne multidimensionnelle est représenté de façon générale par une ellipse dans un espace à deux dimensions formé par deux indicateurs de surveillance.

Par contre, si le modèle représentatif *Mr* est une superposition de fonctions gaussiennes multidimensionnelles, il est difficile et complexe de définir un centre du modèle représentatif *Mr* et, par suite, une distance entre ce centre et un point de fonctionnement caractéristique *Pf.* Dans ce cas, un critère d'appartenance adapté pour définir le positionnement d'un point de fonctionnement caractéristique *Pf* par rapport au modèle représentatif *Mr* peut être la densité de probabilité de ce modèle représentatif *Mr.* La fonction d'appartenance f peut alors être fonction de la densité de probabilité du modèle représentatif *Mr,* une bijection connue existe entre la distance de « Mahalanobis » et la densité de probabilité pour toute fonction gaussienne.

Par exemple, la fonction d'appartenance *f* est une fonction décroissante de la densité de probabilité, dans le cas où le seuil d'alarme *Sa* est un seuil maximum, la densité de probabilité diminuant lorsqu'un point de fonctionnement caractéristique *Pf* s'éloigne du centre du modèle représentatif *Mr.*

Une densité de probabilité d'un modèle représentatif *Mr* et la fonction d'appartenance *f* qui est fonction de cette densité de probabilité permettent de caractériser ainsi chaque point de fonctionnement caractéristique *Pf* et notamment sa position par rapport à une frontière dit modèle représentatif *Mr,* caractérisée par le seuil d'alarme *Sa.* On peut alors définir si ce point de fonctionnement caractéristique *Pf* est situé à l'intérieur du modèle représentatif *Mr.*

Par ailleurs, la densité de probabilité d'une superposition de fonctions gaussiennes multidimensionnelles peut être définie par la somme des densités de probabilité de chaque fonction gaussienne multidimensionnelle, cette somme étant renormalisée selon les caractéristiques d'une densité de probabilité.

De la sorte, il y a une corrélation entre la densité de probabilité de chaque fonction gaussienne multidimensionnelle et la distance de « Mahalanobis » de ces fonctions gaussiennes multidimensionnelles. Il est donc possible de définir la fonction d'appartenance *f* selon la densité de probabilité d'une superposition de fonctions gaussiennes multidimensionnelles.

Par exemple, si le modèle représentatif *Mr* est une superposition de p fonctions gaussiennes dans un espace formé par n indicateurs de surveillance, la densité de probabilité constituant la fonction d'appartenance *f* peut être définie par la formule :

$$f(X) = \sum_{k=1}^{p} \left[ \frac{A_k}{(2\pi)^{\frac{n}{2}} \cdot |C_k|^{\frac{1}{2}}} \cdot e^{-\frac{1}{2}{}^{T}(X-\mu_k) \cdot (C_k)^{-1} \cdot (X-\mu_k)} \right]$$ dans laquelle *p* est un nombre entier positif représentant le nombre de fonctions gaussiennes constituant le modèle représentatif *Mr, k* un nombre entier positif variant de 1 à *p* représentant le numéro d'une fonction gaussienne, *n* est un nombre entier positif représentant le nombre d'indicateurs de surveillance *Ind$_i$* constituant le groupe d'indicateurs *G*, *X* est le vecteur de dimension *n* tel que *X* = (*ind$_1$* ..., *ind$_i$*, ..., *ind$_n$*) formé par les indicateurs de surveillance constituant le groupe d'indicateurs *G*, $\mu_k$ est un vecteur moyen de dimension *n* caractérisant la fonction gaussienne *k*, *C$_k$* est la matrice de covariance de la fonction gaussienne *k*, *T(X-μk)* représente la transposée du vecteur *(X-μ$_k$)*, *A$_k$* est le coefficient de pondération de la fonction gaussienne *k*, *e* est la fonction exponentielle, $\pi$ est une constante égale au rapport de la circonférence d'un cercle par son diamètre et $\sum_{k=1}^{p}$ est la fonction somme pour la fonction gaussienne 1 jusqu'à la fonction gaussienne p.

Cependant, un critère d'appartenance ainsi défini et comparé au seuil d'alarme *Sa* peut engendrer comme évoqué précédemment des cas de non détection. En effet, ce critère d'appartenance peut être inférieur au seuil d'alarme *Sa* alors qu'au moins un indicateur de surveillance est supérieur au seuil de détection *Sd$_i$* correspondant. De fait, on peut déduire de ce critère d'appartenance à une absence de défaut ou bien de risque d'apparition d'un défaut sur le dispositif alors que ce risque d'apparition d'un défaut existe réellement.

L'utilisation de la fonction d'appartenance f et du seuil d'alarme *Sa* sans prendre en compte les indicateurs de surveillance unitairement peut donc engendrer des cas de non détection de défauts et a donc une efficacité inférieure à la seule utilisation des indicateurs de surveillance et la comparaison unitaire à leurs seuils de détection *Sd$_i$* respectifs.

En outre, combiner d'une part la comparaison d'un tel critère d'appartenance au seuil d'alarme *Sa* et d'autre part la comparaison des indicateurs de surveillance à leurs seuils de détection *Sd$_i$* respectifs permet certes de résoudre cet inconvénient, mais peut également générer un fort taux de fausses alarmes.

Afin de pallier ces inconvénients, le procédé de fusion d'indicateurs de surveillance selon l'invention permet de déterminer, au cours d'une étape de prise en compte des seuils de détection *Sd$_i$*, une transformation *T* de la fonction d'appartenance *f* afin de prendre en compte les seuils de détection *Sd$_i$* correspondant aux indicateurs de surveillance dans le calcul de l'indicateur fusionné *HI.*

Cette transformation *T* permet ainsi de transformer la fonction d'appartenance *f* et de déterminer un indicateur fusionné *HI* permettant de conclure précisément et efficacement si le dispositif surveillé présente un défaut ou bien un risque d'apparition d'un défaut.

Cet indicateur fusionné *HI* est notamment différent du critère d'appartenance défini par la fonction d'appartenance *f* pour les zones du modèle représentatif *Mr* où au moins un indicateur de surveillance est supérieur ou égal à son seuil de détection *Sd$_i$*.

Par contre, cette transformation *T* n'agit pas sur la fonction d'appartenance *f* pour les zones du modèle représentatif *Mr* où chaque indicateur de surveillance est inférieur à son seuil de détection *Sd$_i$*. L'indicateur fusionné *HI* est alors égal au critère d'appartenance.

De même, lorsque, pour le modèle représentatif *Mr* dans son intégralité, chaque indicateur de surveillance est inférieur à son seuil de détection *Sd$_i$*, la transformation *T* est une fonction identité ne modifiant pas la fonction d'appartenance *f* et l'indicateur fusionné *HI* est toujours égal à ce critère d'appartenance.

De fait, la transformation *T* agit sur la fonction d'appartenance *f* en intégrant les seuils de détection *Sd$_i$* pour calculer l'indicateur fusionné *HI* uniquement dans les zones nécessaires.

Cependant, cette transformation *T* ne substitue pas simplement un seuil de détection *Sd$_i$* d'un indicateur de surveillance à un seuil d'alarme *Sa* lorsqu'un indicateur de surveillance dépasse son seuil de détection *Sd$_i$*, ce qui correspondrait à supprimer les zones du modèle représentatif *Mr* pour lesquelles au moins le seuil de détection *Sd$_i$* est dépassé par un indicateur de surveillance.

En effet, cette transformation *T* appliquée à la fonction d'appartenance *f* permet de calculer l'indicateur fusionné *HI* en fonction du critère d'appartenance, des indicateurs de surveillance *Ind$_i$*, des seuils de détection *Sd$_i$* et du seuil d'alarme *Sa.* Avantageusement, cet indicateur fusionné *HI* a un comportement régulier dont la variation est proche de celle du critère d'appartenance déterminé par la fonction d'appartenance *f*. De la sorte, cette transformation *T* garantit que si au moins un indicateur de surveillance est supérieur ou égal à son seuil de détection *Sd$_i$*, l'indicateur fusionné *HI* est également supérieur ou égal au seuil d'alarme *Sa.* La présence d'un défaut ou bien un risque d'apparition d'un défaut est ainsi détecté, même si le critère d'appartenance correspondant est inférieur au seuil d'alarme *Sa.* Cet indicateur fusionné *HI* permet ainsi d'avoir un comportement cohérent avec les indicateurs de surveillance le constituant.

Ainsi, si un point de fonctionnement caractéristique *Pf* correspond à un critère d'appartenance inférieur ou égal au seuil d'alarme *Sa,* c'est-à-dire que ce point de fonctionnement caractéristique *Pf* est situé à l'intérieur de la frontière du modèle représentatif *Mr*, et si les critères d'appartenance correspondant aux seuils de détection *Sdi* dans un voisinage suffisamment grand de ce point de fonctionnement caractéristique *Pf* sont supérieurs au seuil d'alarme *Sa,* l'indicateur fusionné *HI* est alors égal au critère d'appartenance.

De fait, afin d'assurer une continuité dans le calcul de l'indicateur *HI* par la transformation *T* appliquée à la fonction d'appartenance *f*, tout point de fonctionnement caractéristique *Pf* situé entre le centre du modèle représentatif *Mr* et un point de fonctionnement caractéristique limite dont le critère d'appartenance est égal au seuil d'alarme *Sa* et dont chaque indicateur de surveillance *Ind$_i$* est inférieur à son seuil de détection *Sd$_i$*, l'indicateur fusionné *HI* est égal au critère d'appartenance.

De même, si le critère d'appartenance d'un point de fonctionnement caractéristique *Pf* est inférieur ou égal au seuil d'alarme *Sa* et si le critère d'appartenance correspondant à au moins un seuil de détection *Sd$_i$* dans un voisinage suffisamment grand de ce point de fonctionnement caractéristique *Pf,* est inférieur ou égal au seuil d'alarme *Sa,* l'indicateur fusionné *HI* est alors proportionnel au critère d'appartenance. Un coefficient multiplicateur est appliqué au critère d'appartenance et égal au rapport entre le seuil d'alarme *Sa* et un critère d'appartenance correspondant à ce seuil de détection *Sd$_i$*. L'indicateur fusionné *HI* est ainsi supérieur ou égal au seuil d'alarme *Sa* et correspond à la présence ou bien à un risque d'apparition d'un défaut. Notamment, si un indicateur de surveillance *Ind$_i$* est égal à son seuil de détection *Sd$_i$*, l'indicateur fusionné *HI* est alors égal au seuil d'alarme *Sa.*

De plus, afin d'assurer une continuité dans le calcul de l'indicateur *HI,* tout point de fonctionnement caractéristique *Pf situé* entre le centre du modèle représentatif Mr et un point de fonctionnement caractéristique dont le critère d'appartenance est inférieur au seuil d'alarme *Sa* et dont au moins un indicateur de surveillance *Indi* est supérieur ou égal à son seuil de détection *Sd$_i$*, l'indicateur fusionné *HI* est proportionnel au critère d'appartenance, le coefficient multiplicateur appliqué étant égal au rapport entre le seuil d'alarme *Sa* et un critère d'appartenance correspondant à ce seuil de détection *Sd$_i$*.

Par exemple, pour un modèle représentatif *Mr* qui est une fonction gaussienne multidimensionnelle représentée dans l'espace des indicateurs de surveillance, tout point de fonctionnement caractéristique *Pf* situé sur une droite passant par le centre de ce modèle représentatif *Mr* et un point de fonctionnement caractéristique situé sur la frontière de ce modèle représentatif *Mr*, c'est-à-dire dont le critère d'appartenance, qui peut être la distance de « mahalanobis », est égal au seuil d'alarme *Sa* et dont le critère d'appartenance correspondant à chaque seuil de détection *Sdi* est supérieur à ce seuil d'alarme *Sa,* le critère déterminant la détection d'un défaut est ce seuil d'alarme *Sa.* L'indicateur fusionné *HI* est alors égal au critère d'appartenance.

Par contre, si, pour ce même modèle représentatif *Mr*, tout point de fonctionnement caractéristique *Pf* situé sur une droite passant par le centre de ce modèle représentatif *Mr* et un point de fonctionnement caractéristique situé sur la frontière de ce modèle représentatif *Mr* et dont le critère d'appartenance correspondant à au moins un seuil de détection *Sdi* est inférieur ou égal à ce seuil d'alarme *Sa,* le critère déterminant la détection d'un défaut est ce seuil de détection *Sd$_i$*. L'indicateur fusionné *HI* est alors proportionnel au critère d'appartenance, le coefficient multiplicateur appliqué au critère d'appartenance étant égal au rapport entre le seuil d'alarme *Sa* et le critère d'appartenance correspondant à ce seuil de détection *Sd$_i$*.

En outre, des conditions supplémentaires peuvent être respectées par la transformation *T* afin notamment que son comportement lorsqu'elle est appliquée à la fonction d'appartenance *f* soit le plus proche possible du comportement de la fonction d'appartenance *f*. Ainsi, la transformation *T* doit être représentative de la fonction d'appartenance *f* afin de déterminer efficacement et précisément la présence d'un défaut ou bien un risque d'apparition d'un défaut sur le dispositif ou bien le regroupement de dispositifs surveillés. Ces conditions supplémentaires dépendent des caractéristiques du modèle représentatif *Mr* et de la fonction d'appartenance *f* ainsi que du type de modélisation utilisé pour définir le modèle représentatif *Mr*.

Une première condition supplémentaire est la continuité de la transformation *T* appliquée à la fonction d'appartenance *f* si la fonction d'appartenance *f* est continue.

Selon une seconde condition supplémentaire, chaque dérivée partielle d'ordre *q* de la transformation *T* appliquée à la fonction d'appartenance *f* doit être bornée sur son domaine de définition, *q* étant un nombre entier positif. Cette seconde condition supplémentaire garantit que la transformation *T* appliquée à la fonction d'appartenance *f* et chacune de ses dérivées d'ordre ($q$-1) ne comportent pas de saut abrupt, ni de variation brutale ou de rupture de pente. En effet, un tel saut abrupt ou bien une telle rupture de pente peut être assimilé a la présence d'un défaut sur l'indicateur fusionné *HI* et conduire ainsi au déclenchement d'une fausse alarme.

Selon une troisième condition supplémentaire, lorsque la fonction d'appartenance *f* est de classe $C^q$, alors la transformation *T* appliquée à la fonction d'appartenance *f* est au moins de classe *Cm*, avec *m* choisi entre 1 et *q*, *m* et *q* étant des nombres entiers positifs et *m* étant inférieur ou égal à *q.* Une fonction est de classe $C^q$ lorsque cette fonction est *q* fois dérivable et que ces dérivées sont continues.

De même, selon une quatrième condition supplémentaire, lorsque la fonction d'appartenance *f* est *q* fois dérivable, alors la transformation *T* appliquée à la fonction d'appartenance *f* est également *q* fois dérivable, *q* étant un nombre entier positif.

Selon une cinquième condition supplémentaire, l'écart entre la transformation *T* appliquée à la fonction d'appartenance *f* et cette fonction d'appartenance *f* est minimisé afin que cette transformation *T* ait un comportement le plus similaire possible à cette fonction d'appartenance *f*. Un critère d'écart utilisé pour déterminer la transformation *T* est par exemple la méthode des moindres carrés.

De même, selon une sixième condition supplémentaire, l'écart entre les dérivées partielles d'ordre *q* de la transformation *T* et les dérivées partielles d'ordre *q* de cette fonction d'appartenance *f* est minimisé, *q* étant un nombre entier positif.

Ces diverses conditions supplémentaires permettent avantageusement que la variation de l'indicateur fusionné *HI* soit la plus représentative possible de la réalité des variations des caractéristiques du dispositif surveillé et en particulier des points fonctionnels caractéristiques *Pf*. Notamment tout changement de la variabilité de l'indicateur fusionné *HI* ou de sa pente ou encore de la variabilité de sa pente doit être cohérent et correspondre à des changements équivalents au niveau des caractéristiques du dispositif surveillé et en particulier des points fonctionnels caractéristiques *Pf*.

Avantageusement, la transformation *T* permet de déterminer l'indicateur fusionné *HI* d'une part en prenant en compte la corrélation entre l'ensemble des indicateurs de surveillance améliorant ainsi la détection d'un défaut et d'autre part en intégrant des « garde-fous » sur les niveaux absolus constitués par les indicateurs de surveillance. Par conséquent, le procédé de fusion selon l'invention permet de s'affranchir du suivi unitaire de ces indicateurs de surveillance tout en garantissant une non régression par rapport à ce suivi unitaire des indicateurs de surveillance et en permettant d'améliorer les performances de détection d'un défaut. On entend par « non régression » une efficacité de détection de défauts au moins égale à ce suivi unitaire des indicateurs de surveillance, le procédé de fusion permettant de détecter au moins tous les défauts détectés par un suivi unitaire des indicateurs de surveillance.

La présente invention a aussi pour objet un système de fusion d'indicateurs de surveillance d'un dispositif afin de mettre en oeuvre le procédé de fusion précité.

Des capteurs de mesures sont positionnés sur ce dispositif et/ou à proximité de ce dispositif à surveiller. Un tel système de fusion d'indicateurs de surveillance comporte alors :

- un moyen de centralisation muni d'au moins un calculateur central et d'au moins une mémoire principale,

- un système d'acquisition des mesures de ces capteurs et,

- au moins un moyen de transfert entre ce système d'acquisition et ce moyen de centralisation.

Ce système de fusion d'indicateurs de surveillance d'un dispositif est ainsi capable de mettre en oeuvre le procédé de fusion d'indicateurs de surveillance évoqué précédemment.

Tout d'abord, la mémoire principale permet notamment de stocker la répartition des indicateurs de surveillance $Ind_i$ dans chaque groupe d'indicateurs et leurs seuils de détection $Sd_i$ respectifs ainsi que des algorithmes *g* de calcul de points de fonctionnement caractéristiques *Pf* à partir des indicateurs de surveillance $Ind_i$ de chaque groupe d'indicateurs.

De plus, le moyen de transfert permet de transférer les mesures des capteurs effectuées par l'intermédiaire du système d'acquisition vers le moyen de centralisation, le calculateur central du moyen de centralisation calculant alors les indicateurs de surveillance $Ind_i$ correspondants.

Cependant, le système d'acquisition peut également comporter un calculateur d'acquisition et une mémoire auxiliaire afin de calculer et de stocker les indicateurs de surveillance $Ind_i$.

De même, le système d'acquisition et le moyen de centralisation peuvent être regroupés et former un seul et même moyen.

Au cours d'une étape d'apprentissage, des points de fonctionnement d'apprentissage du dispositif peuvent ainsi être calculés par le calculateur central pour chaque groupe d'indicateurs et stockés dans la mémoire principale en appliquant un algorithme *g* prédéfini et spécifique à ce groupe d'indicateurs *G* aux indicateurs de surveillance d'apprentissage.

Ensuite, le calculateur central permet de déterminer, à partir de ces points de fonctionnement d'apprentissage, un modèle représentatif *Mr* de l'état sain du dispositif et une fonction d'appartenance *f* d'un point de fonctionnement caractéristique *Pf* du dispositif au modèle représentatif *Mr* de l'état sain du dispositif pour le groupe d'indicateurs ainsi qu'un seuil d'alarme *Sa* du modèle représentatif *Mr*.

Le calculateur central permet également de déterminer au cours d'une étape de prise en compte des seuils de détection $Sd_i$, une transformation *T* de la fonction d'appartenance *f* afin de prendre en compte d'une part le seuil d'alarme *Sa* du modèle représentatif *Mr* et d'autre part les seuils de détection $Sd_i$ des indicateurs de surveillance $Ind_i$ du groupe d'indicateurs.

Par la suite, à partir des indicateurs de surveillance $Ind_i$ déterminés par le calculateur central en fonction des mesures des capteurs effectuées par l'intermédiaire du système d'acquisition, le calculateur central applique la transformation $T$ de la fonction d'appartenance $f$ aux indicateurs de surveillance $Ind_i$ du groupe d'indicateurs afin de déterminer un indicateur fusionné $HI$.

Enfin, le calculateur central compare l'indicateur fusionné $HI$ au seuil d'alarme $Sa$ correspondant et en déduit si une présence ou un risque d'apparition d'un défaut ou bien d'une panne est détecté sur le dispositif surveillé.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé de fusion d'indicateurs de surveillance selon l'invention,

- la figure 2, un aéronef à voilure tournante muni d'un système de fusion d'indicateurs de surveillance d'un dispositif selon l'invention,

- les figures 3 à 5, trois graphiques représentant respectivement un modèle représentatif $Mr$ de l'état sain du dispositif et

- la figure 6, deux graphiques représentant une fonction d'appartenance $f$ et une transformation $T$ de cette fonction d'appartenance $f$ ainsi qu'une densité de probabilité.

Les éléments présents dans plusieurs figures distinctes sont affectés d'une seule et même référence.

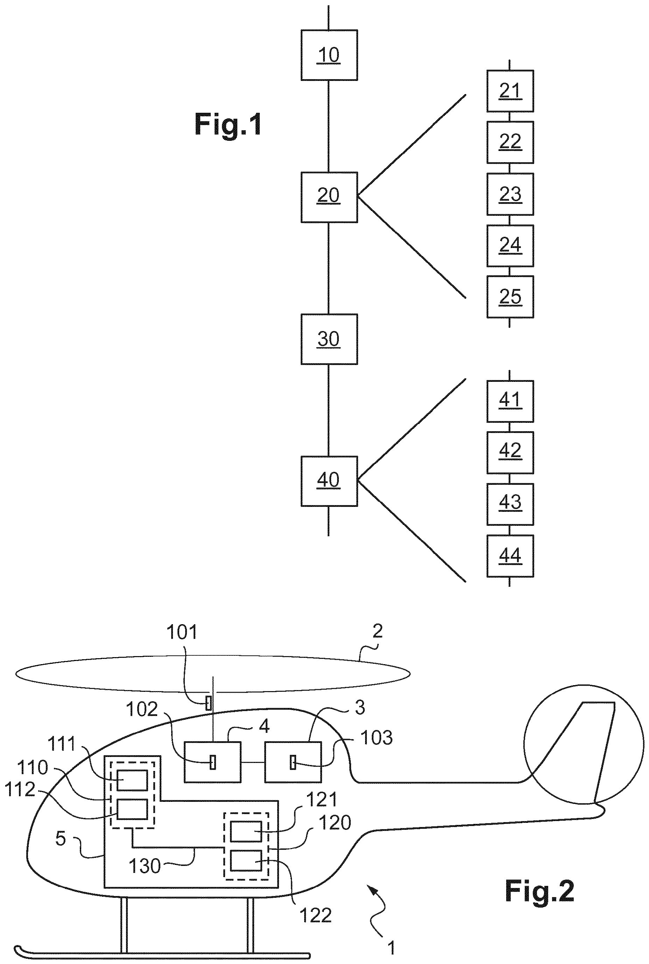

La figure 1 représente le schéma synoptique d'un procédé de fusion d'indicateurs de surveillance d'un dispositif 3,4 comportant neuf étapes principales. Ce procédé permet de surveiller de façon efficace et fiable le dispositif 3,4 et plus particulièrement son fonctionnement.

La figure 2 représente un aéronef 1 à voilure tournante muni d'un système de fusion 5 d'indicateurs de surveillance d'un dispositif 3,4, ce système de fusion 5 étant capable de mettre en oeuvre le procédé de fusion représenté sur la figure 1.

Cet aéronef 1 comporte au moins un moteur thermique 3 entraînant un mécanisme de transmission de puissance mécanique 4, telle une boîte de transmission principale de puissance, qui entraîne en rotation un rotor principal 2 de l'aéronef 1.

Cet aéronef 1 comporte trois capteurs 101,102,103, positionnés respectivement au niveau du rotor principal 2, du mécanisme de transmission de puissance mécanique 4 et du moteur thermique 3. Ces capteurs 101,102,103 permettent de surveiller le moteur 3, le mécanisme de transmission de puissance 4 et le rotor principal 2. Ce moteur 3, ce mécanisme de transmission de puissance 4 et le rotor principal 2 peuvent être désignés dans la suite de la description par le terme général « dispositif ».

Ce système de fusion 5 comporte un moyen de centralisation 120 muni d'un calculateur central 121 et d'une mémoire principale 122 ainsi qu'un système d'acquisition de mesures 110. Ce système d'acquisition de mesures 110 peut comporter un calculateur d'acquisition 111 et une mémoire auxiliaire 112. Ce système de fusion 5 comporte également un moyen de transfert 130 permettant le transfert de données entre le système d'acquisition 110 et le moyen de centralisation 120.

Des indicateurs de surveillance $Ind_i$ des dispositifs 3,4 peuvent être calculés à partir des mesures des capteurs 101,102,103. Un indicateur de surveillance $Ind_1, Ind_2, Ind_3$ peut ainsi être respectivement calculé à partir des mesures d'un seul capteur 101,102,103. Un indicateur de surveillance supplémentaire $Ind_4$ peut également être calculé à partir des mesures de plusieurs capteurs, par exemple à partir des mesures des deux capteurs 101,102. Ainsi, le premier indicateur de surveillance $Ind_1$ est notamment destiné à la surveillance du rotor principal 2, le second indicateur de surveillance $Ind_2$ est notamment destiné à la surveillance du mécanisme de transmission de puissance 4 et le troisième indicateur de surveillance $Ind_3$ est notamment destiné à la surveillance du moteur 3. De plus, le quatrième indicateur de surveillance $Ind_4$ peut permettre de surveiller le rotor principal 2 et le mécanisme de transmission de puissance 4 ainsi que la liaison entre eux.

Ces indicateurs de surveillance $Ind_1, Ind_2, Ind_3, Ind_4$ des dispositifs 3,4,5 peuvent être calculés par l'intermédiaire du calculateur d'acquisition 111 pendant le fonctionnement de chaque dispositif 3,4,5 et pendant le vol de l'aéronef 1. Ces indicateurs $Ind_1, Ind_2, Ind_3, Ind_4$ peuvent être stockés temporairement dans la mémoire auxiliaire 112 du système d'acquisition 110 durant le vol de l'aéronef 1.

Cependant, ces indicateurs de surveillance $Ind_1, Ind_2, Ind_3, Ind_4$ peuvent également être calculés par l'intermédiaire du calculateur central 121, les mesures des capteurs 101,102,103 étant alors transférées du moyen d'acquisition 110 vers le moyen de centralisation 120 par le moyen de transfert 130. Ce transfert et ce calcul peuvent avoir lieu pendant le vol de l'aéronef 1 ou bien après le vol de cet aéronef 1.

En outre, si les indicateurs de surveillance sont calculés après un vol de l'aéronef 1 et au sol, le moyen de centralisation 120 peut alors être positionné à l'extérieur à l'aéronef 1, par exemple dans une plateforme au sol.

Chaque indicateur de surveillance $Ind_1, Ind_2, Ind_3, Ind_4$ peut être comparée respectivement à un seuil de détection

$Sd_1,Sd_2,Sd_3,Sd_4$ de défauts associé à cet indicateur de surveillance $Ind_1,Ind_2,Ind_3,Ind_4$ afin de détecter la présence d'un défaut ou un risque d'apparition d'un tel défaut sur le dispositif 3,4,5. Ce seuil de détection $Ind_1,Ind_2,Ind_3,Ind_4$ peut être un seuil maximum ou bien un seuil minimum, voire un seuil double formé d'une limite inférieure et d'une limite supérieure constituant ainsi un intervalle.

Ce seuil de détection $Ind_1,Ind_2,Ind_3,Ind_4$ de défauts est généralement constant, mais il peut être variable suivant divers paramètres tel que le temps. Ce seuil de détection $Ind_1,Ind_2,Ind_3,Ind_4$ peut ainsi être un seuil appris ou bien un seuil glissant.

Ce seuil de détection $Ind_1,Ind_2,Ind_3,Ind_4$ de défauts peut également être variable selon au moins un autre indicateur de surveillance du dispositif 3,4,5 surveillé.

Ces indicateurs de surveillance $Ind_1,Ind_2,Ind_3,Ind_4$ ainsi que les seuils de détection $Ind_1,Ind_2,Ind_3,Ind_4$ peuvent être stockés dans la mémoire principale 122.

Lors d'une étape préliminaire 10 du procédé de fusion selon l'invention, on répartit les indicateurs de surveillance $Ind_1,Ind_2,Ind_3,Ind_4$ de chaque dispositif 3,4,5 dans au moins un groupe d'indicateurs $G_1, G_2$, chaque groupe d'indicateurs $G_1,G_2$ étant destiné à la surveillance d'un seul dispositif 3,4. Par exemple, un premier groupe d'indicateurs $G_1$ comporte trois indicateurs de surveillance $Ind_1,Ind_2,Ind_4$ et est attaché à la surveillance du mécanisme de transmission de puissance 4 alors qu'un second groupe d'indicateurs $G_2$ comporte le seul indicateur de surveillance $Ind_3$ et est attaché à la surveillance du moteur 3.

Lors d'une étape d'apprentissage 20 du procédé de fusion selon l'invention, on détermine un modèle représentatif $Mr$ de l'état sain de chaque dispositif 3,4, une fonction d'appartenance f pour chaque dispositif 3,4 d'un point de fonctionnement caractéristique $Pf$ au modèle représentatif $Mr$ de ce dispositif 3,4 ainsi qu'un seuil *d'alarme Sa* associé à la fonction d'appartenance *f* à partir de points de fonctionnement d'apprentissage. Cette étape d'apprentissage 20 peut se décomposer en plusieurs sous-étapes 21 à 25.

Au cours de la première sous-étape 21, on détermine des indicateurs de surveillance d'apprentissage pour chaque groupe d'indicateurs $G_1,G_2$ pour un dispositif 3,4 sain. Pour déterminer ces indicateurs de surveillance d'apprentissage, on acquiert des mesures issues des différents capteurs 101,102,103 par l'intermédiaire du système d'acquisition 110 sur un dispositif 3,4 sain. Ensuite, on calcule en fonction de ces mesures issues des différents capteurs 101,102,103 les indicateurs de surveillance d'apprentissage correspondant respectivement aux indicateurs de surveillance $Ind_1,Ind_2,Ind_3,Ind_4$.

Au cours de la seconde sous-étape 22, on détermine des points de fonctionnement d'apprentissage pour chaque dispositif 3,4 en appliquant un algorithme g prédéfini et spécifique à chaque groupe d'indicateurs $G_1, G_2$ aux indicateurs de surveillance d'apprentissage pour chaque groupe d'indicateurs $G_1, G_2$. Les points de fonctionnement d'apprentissage forment un ou plusieurs nuages de points qui sont caractéristiques de l'état sain de chaque dispositif 3,4 relatif à un groupe d'indicateurs $G_1, G_2$. Les algorithmes prédéfinis et spécifiques à chaque groupe d'indicateurs $G_1,G_2$ peuvent être stockés dans la mémoire principale 122.

L'ensemble des indicateurs de surveillance d'apprentissage de chaque dispositif 3,4 peut être conservé dans la mémoire principale 122 du moyen de centralisation 120 ainsi que les points de fonctionnement d'apprentissage de chaque dispositif 3,4.

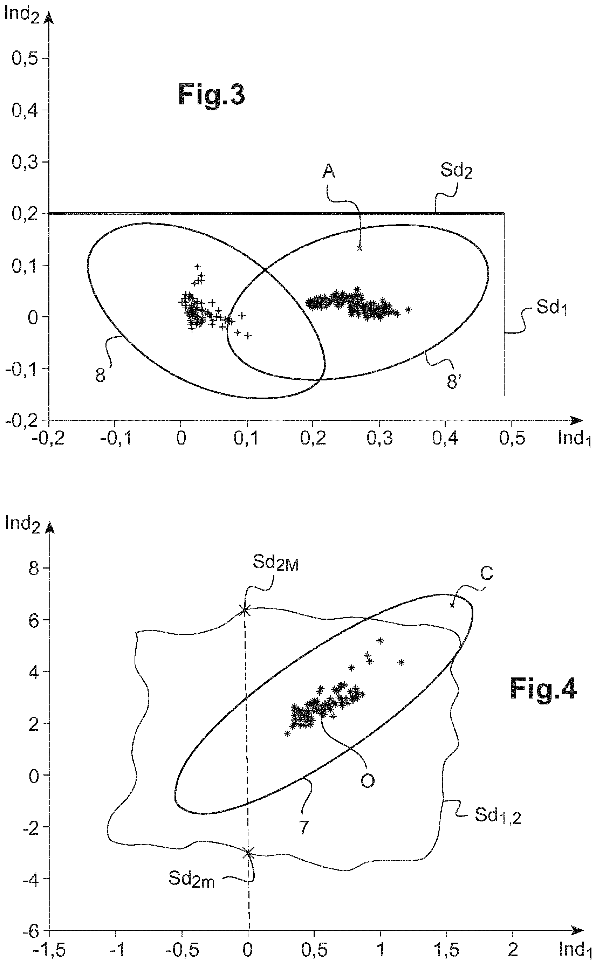

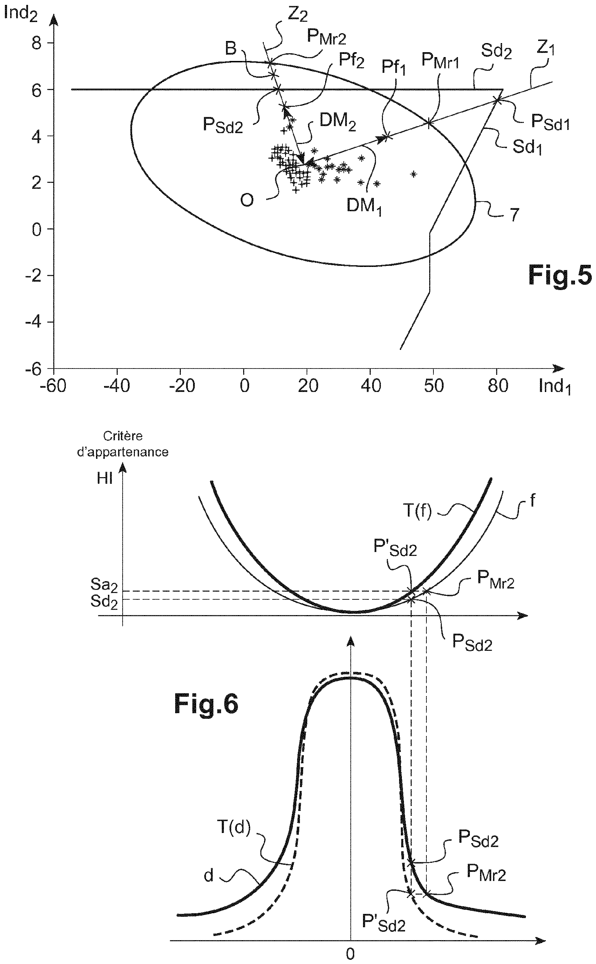

Des exemples de tels nuages de points de fonctionnement d'apprentissage concernant le premier groupe d'indicateurs $G_1$ et, par suite, le mécanisme de transmission de puissance 4 sont représentés sur les figures 3 à 5. Ces figures 3 à 5 représentent des graphiques ayant pour abscisse les valeurs du premier indicateur de surveillance $Ind_1$ et pour ordonnée les valeurs du second indicateur de surveillance $Ind_2$. Sur les figures 4 et 5, les points de fonctionnement d'apprentissage forment un seul nuage de points alors que sur la figure 3, les points de fonctionnement d'apprentissage forment deux nuages distincts de points.

Sur ces figures 3 à 5 sont également représentés les seuils de détection $Sd_1,Sd_2$ correspondant respectivement aux indicateurs de surveillance $Ind_1,Ind_2$. On constate que les seuils de détection $Sd_1,Sd_2$ sont constants sur la figure 3. Par contre, sur la figure 5, le second seuil de détection $Sd_2$ est constant également alors que le premier seuil de détection $Sd_1$ varie en fonction des valeurs du second indicateur de surveillance $Ind_2$. Les seuils de détection $Sd_1,Sd_2$ représentés sur ces figures 3 et 5 sont des seuils de détection maximum.

De plus, sur la figure 4, les seuils $Sd_1,Sd_2$ sont représentés par une enveloppe $Sd_{1,2}$ qui varie en fonction des indicateurs de surveillance $Ind_1,Ind_2$. Cette enveloppe $Sd_{1,2}$ est formé d'une succession de couples de seuils de détection $Sd_1,Sd_2$ minimum et maximum respectivement en fonction de l'autre seuil de détection $Sd_2,Sd_1$. Par exemple, pour un premier indicateur de surveillance $Ind_1$ de valeur nulle, l'enveloppe $Sd_{1,2}$ est formé d'un second seuil de détection minimum $Sd_{2m}$ et d'un second seuil de détection maximum $Sd_{2M}$. L'enveloppe $Sd_{1,2}$ constitue ainsi un intervalle, la présence d'un défaut étant alors être détectée lorsque l'indicateur de surveillance $Ind_1,Ind_2$ se trouve à l'extérieur de l'intervalle.

Au cours de la troisième sous-étape 23, on détermine à partir des points de fonctionnement d'apprentissage de chaque dispositif 3,4 un modèle représentatif $Mr$ de l'état sain de chaque dispositif 3,4 pour chaque groupe d'indicateurs $G_1,G_2$. Dans le cas des figures 4 et 5 où les points de fonctionnement d'apprentissage forment un seul nuage de points, ce nuage peut être modélisé par une seule fonction gaussienne multidimensionnelle 7 qui constitue alors le modèle représentatif *Mr* de l'état sain du mécanisme de transmission de puissance 4. Par contre, sur la figure 3, deux nuages distincts de points sont représentés. De fait, une seule fonction gaussienne multidimensionnelle ne suffit pas pour modéliser l'ensemble de ces points de fonctionnement d'apprentissage. Le modèle représentatif *Mr* de l'état sain du mécanisme de transmission de puissance 4 est alors formé par une superposition de fonctions gaussiennes multidimensionnelles 8,8', chaque fonction gaussienne multidimensionnelle 8,8' correspond respectivement à un des deux nuages de points de fonctionnement d'apprentissage. Dans les deux cas, les fonctions gaussiennes multidimensionnelles 7,8,8' sont de dimensions égales au nombre d'indicateurs de surveillance $Ind_1, Ind_2, Ind_4$ formant le groupe d'indicateurs $G_1$, soit trois dans cet exemple concernant le mécanisme de transmission de puissance 4. De plus, ces fonctions gaussiennes tridimensionnelles 7,8,8' sont représentées par des ellipses dans un espace à deux dimensions tel que sur les graphiques des figures 3,4,5.

Au cours de la quatrième sous-étape 24, on détermine une fonction d'appartenance *f* d'un point de fonctionnement caractéristique *Pf* de chaque dispositif 3,4 au modèle représentatif *Mr* de l'état sain de ce dispositif 3,4 à partir de ces points de fonctionnement d'apprentissage. Cette fonction d'appartenance *f* appliqué aux indicateurs de surveillance $Ind_1, Ind_2, Ind_4$ formant le groupe d'indicateurs $G_1$ permet de définir un critère d'appartenance au modèle représentatif *Mr* pour tout point de fonctionnement caractéristique *Pf*. Ce critère d'appartenance peut être un critère de positionnement de ce point de fonctionnement caractéristique *Pf* par rapport au modèle représentatif *Mr* et plus précisément une *distance D* entre ce point de fonctionnement caractéristique *Pf* et le centre O de ce modèle représentatif *Mr*.

Ce critère d'appartenance est par exemple la distance de « Mahalanobis » qui est particulièrement adaptée dans le cas où le modèle représentatif *Mr* est modélisé par une seule fonction gaussienne multidimensionnelle. La fonction d'appartenance *f* est alors une fonction déterminant cette distance de « Mahalanobis ».

Ce critère d'appartenance peut également être fonction de la densité de probabilité du modèle représentatif *Mr* qu'il soit modélisé par une fonction gaussienne ou bien une superposition de fonctions gaussiennes multidimensionnelles. En effet, une bijection connue existe entre la distance de « Mahalanobis » et la densité de probabilité pour toute fonction gaussienne ou toute superposition de fonctions gaussiennes. De fait, une corrélation existe entre la densité de probabilité de chaque fonction gaussienne multidimensionnelle et la distance de « Mahalanobis » associée à cette fonction gaussienne multidimensionnelle. Il est donc possible de définir la fonction d'appartenance *f* qui est alors fonction de cette densité de probabilité.

Le critère d'appartenance d'un point de fonctionnement caractéristique *Pf* d'un dispositif 3,4 est alors déterminé en appliquant la fonction d'appartenance *f* aux indicateurs de surveillance $Ind_1, Ind_2, Ind_3, Ind_4$ du groupe d'indicateurs $G_1, G_2$ correspondant à ce point de fonctionnement caractéristique *Pf*.

Au cours de la cinquième sous-étape 25, on détermine un seuil d'alarme *Sa* associé à chaque fonction d'appartenance *f*, ce seuil d'alarme *Sa* étant égal au critère d'appartenance d'un point de fonctionnement caractéristique limite se trouvant sur la frontière du modèle représentatif *Mr* de l'état sain de ce dispositif 3,4. Ce seuil d'alarme *Sa* peut ensuite être comparé au critère d'appartenance de tout point de fonctionnement caractéristique *Pf* d'un dispositif 3,4 afin de déterminer la position de ce point de fonctionnement caractéristique *Pf* par rapport à la frontière de ce modèle représentatif *Mr* et, par suite, s'il y a présence d'un défaut ou risque d'apparition d'un défaut sur ce dispositif 3,4. Ce seuil d'alarme *Sa* peut être un seuil maximum ou bien un seuil minimum, voire un seuil double formé d'une limite inférieure et d'une limite supérieure constituant ainsi un intervalle. Ce seuil d'alarme *Sa* peut également être un seuil appris ou bien un seuil glissant.

Les modèles représentatifs *Mr* de l'état sain de chaque dispositif 3,4 ainsi que chaque fonction d'appartenance *f* et chaque seuil d'alarme *Sa* associés peuvent être conservés dans la mémoire principale 122 du moyen de centralisation 120.

Cependant, l'utilisation d'un tel modèle représentatif *Mr* de l'état sain d'un dispositif 3,4 s'il permet de prendre en compte une corrélation entre les indicateurs de surveillance $Ind_i$ peut également entraîner des incohérences entre ce critère d'appartenance et les seuils de détection $Sd_i$.

Selon la figure 3, les deux fonctions gaussiennes 8,8' formant le modèle représentatif *Mr* sont situées entièrement sous les deux seuils de détection $Sd_1, Sd_2$. De fait, un point de fonctionnement caractéristique *A* dont le critère d'appartenance est inférieur au seuil d'alarme *Sa*, ce point de fonctionnement caractéristique *A* étant situé à l'intérieur de ce modèle *Mr,* est issu d'indicateurs de surveillance $Ind_1, Ind_2, Ind_4$ respectant également les deux seuils de détection $Sd_1, Sd_2$. Il n'y a donc aucune incohérence entre ce modèle représentatif *Mr* et les deux seuils de détection $Sd_1, Sd_2$.

Par contre, selon les deux figures 4 et 5, la fonction gaussienne 7 formant le modèle représentatif *Mr* est de part et d'autre des deux seuils de détection $Sd_1, Sd_2$. De fait, deux points de fonctionnement caractéristiques *B,C* dont les critères d'appartenance sont inférieurs au seuil d'alarme *Sa,* ces points de fonctionnement caractéristiques *B,C* étant situés à l'intérieur de leur modèle représentatif *Mr* respectif, sont issus d'indicateurs de surveillance $Ind_1, Ind_2, Ind_4$ ne respectant pas le seuil de détection $Sd_2$ pour le point de fonctionnement caractéristique *B* et les deux seuils de détection $Sd_1, Sd_2$ pour le point de fonctionnement caractéristique *C*, ce point de fonctionnement caractéristique C étant situé à l'extérieur de l'enveloppe $Sd_{1,2}$. Dans ce cas, les critères d'appartenance correspondant à ces points de fonctionnement caractéristiques $B,C$ permettent de conclure que le mécanisme de transmission de puissance 4 est sain alors que la comparaison unitaire des indicateurs de surveillance $Ind_1,Ind_2$ avec les seuils de détection $Sd_1,Sd_2$ indique la présence d'un défaut. Il y a alors des incohérences entre ce modèle représentatif $Mr$ et les deux seuils de détection $Sd_1,Sd_2$.

Lors d'une étape de prise en compte des seuils de détection 30 du procédé de fusion selon l'invention, on détermine une transformation $T$ de ladite fonction d'appartenance $f$ afin de prendre en compte d'une part le seuil d'alarme $Sa$ du modèle représentatif $Mr$ et d'autre part les seuils de détection $Sd_1$ des indicateurs de surveillance $Ind_i$ du groupe d'indicateurs $G_1, G_2$.

Cette transformation $T$ permet d'éviter des incohérences entre le modèle représentatif $Mr$ et les seuils de détection $Sd_i$ et de déterminer un indicateur fusionné $HI$ permettant de conclure précisément et efficacement si le dispositif 3,4 surveillé présente un défaut ou bien un risque d'apparition d'un défaut.

Lors d'une étape de surveillance 40 du procédé de fusion selon l'invention, on déduit des indicateurs de surveillance $Ind_1,Ind_2,Ind_3,Ind_4$ d'un groupe d'indicateurs $G_1,G_2$ un état de fonctionnement du dispositif 3,4 surveillé. Cette étape de surveillance 40 peut se décomposer en plusieurs sous-étapes 41 à 44.

Au cours de la première sous-étape 41, on détermine des indicateurs de surveillance $Ind_1,Ind_2,Ind_3,Ind_4$ d'un groupe d'indicateurs $G_1,G_2$. Pour déterminer ces indicateurs de surveillance $Ind_1,Ind_2,Ind_3,Ind_4$, on acquiert des mesures issues des différents capteurs 101,102,103 par l'intermédiaire du système d'acquisition 110, puis, on calcule en fonction de ces mesures issues des différents capteurs 101,102,103 les indicateurs de surveillance $Ind_1, Ind_2, Ind_3, Ind_4$.

Au cours de la seconde sous-étape 42, on détermine un indicateur fusionné $HI$ en appliquant la transformation $T$ de ladite fonction d'appartenance $f$ à ces indicateurs de surveillance $Ind_1,Ind_2,Ind_3,Ind_4$ d'un groupe d'indicateurs $G_1,G_2$ d'un dispositif 3,4. Cet indicateur fusionné $HI$ d'un groupe d'indicateurs $G_1\ G_2$ est déterminé en prenant en compte le seuil d'alarme $Sa$ et les seuils de détection $Sd_1,Sd_2$.

Cet indicateur fusionné $HI$ peut être égal ou bien différent du critère d'appartenance défini par la fonction d'appartenance $f$ selon la position de ce modèle représentatif $Mr$ par rapport aux seuils de détection $Sd_1,Sd_2,Sd_3,Sd_4$ correspondant aux indicateurs de surveillance $Ind_1,Ind_2,Ind_3,Ind_4$.

Par exemple, lorsque le modèle représentatif $Mr$ dans son intégralité se situe en dessous de tous les seuils de détection $Sd_i$ comme représenté sur la figure 3, la transformation $T$ est une fonction identité ne modifiant pas la fonction d'appartenance $f$ et l'indicateur fusionné $HI$ est alors égal à ce critère d'appartenance, aucune incohérence n'existant entre ce modèle représentatif $Mr$ et les seuils de détection $Sd_i$.

A contrario, lorsque le modèle représentatif $Mr$ est en intersection avec au moins un seuil de détection $Sd_1,Sd_2$ comme représenté sur les figures 4 et 5, la transformation $T$ agit sur la fonction d'appartenance $f$ en intégrant ces seuils de détection $Sd_1,Sd_2$ pour calculer l'indicateur fusionné $HI$. Cette transformation $T$ est nécessaire uniquement dans les zones d'incohérence entre le seuil d'alarme $Sa$ et au moins un seuil de détection $Sd_1,Sd_2$, la transformation $T$ n'ayant aucun effet dans les autres zones du modèle représentatif $Mr$. On entend par « zone d'incohérence » entre le seuil d'alarme $Sa$ et au moins un seuil de détection $Sd_i$ toute zone pour laquelle un point de fonctionnement caractéristique dont le critère d'appartenance est inférieur ou égal au seuil d'alarme $Sa$ est issu d'au moins un indicateur de surveillance $Ind_i$ supérieur ou égal à son seuil de détection $Sd_i$.

Par exemple, le critère d'appartenance étant une distance entre le centre $O$ du modèle représentatif $Mr$ et chaque point de fonctionnement caractéristique $Pf_1,Pf_2$ représenté sur la figure 5, telle que la distance de « Mahalanobis », le mode de calcul de l'indicateur fusionné $HI$ correspondant aux deux points de fonctionnement caractéristiques $Pf_1, Pf_2$ est différent. Le critère d'appartenance de ces deux points de fonctionnement caractéristiques $Pf_1,Pf_2$ est respectivement la distance de « Mahalanobis » $DM_1,DM_2$.

L'intersection entre d'une part une première droite $Z_1$ passant par le centre $O$ du modèle représentatif $Mr$ et un premier point de fonctionnement caractéristique $Pf_1$ et d'autre part la frontière du modèle représentatif $Mr$ constitue un point $P_{Mr1}$. La distance de « Mahalanobis » $DM_{PMr1}$ de ce point $P_{Mr1}$ est le premier seuil d'alarme $Sa_1$. L'intersection entre cette première droite $Z_1$ et le premier seuil de détection $Sd_1$ constitue un point $Ps_{d1}$. La distance de « Mahalanobis » $DM_{PMr1}$ est inférieure à la distance de « Mahalanobis » $DM_{PSd1}$ de ce point $P_{Sd1}$ correspondant au premier seuil de détection $Sd_1$. De fait, le critère d'appartenance d'un premier point de fonctionnement caractéristique $Pf_1$ situé sur la première droite $Z_1$, qui est la distance de « Mahalanobis » $D_{M1}$, peut être égal au premier seuil d'alarme $Sa_1$ tout en étant inférieur à la distance de « Mahalanobis » $DM_{PSd1}$ de ce point $P_{Sd1}$ correspondant au premier seuil de détection $Sd_1$. Il y a donc cohérence entre le premier seuil d'alarme $Sa_1$ et le premier seuil de détection $Sd_1$. L'indicateur fusionné $HI$ est alors égal au critère d'appartenance, c'est-à-dire la distance de « Mahalanobis ».

En conséquence, pour toute droite passant par le centre $O$ du modèle représentatif $Mr$ et un point de fonctionnement caractéristique $Pf$ dont le seuil d'alarme $Sa$ formé par l'intersection de cette droite et la frontière du modèle représentatif $Mr$ est inférieur à la distance de « Mahalanobis » d'un point intersection entre cette droite et chaque seuil de détection $Sd_i$, l'indicateur fusionné $HI$ est alors égal au critère d'appartenance de ce point de fonctionnement caractéristique $Pf$.

Par contre, l'intersection entre une seconde droite $Z_2$ passant par le centre $O$ du modèle représentatif $Mr$ et un second point de fonctionnement caractéristique $Pf_2$ et la frontière du modèle représentatif $Mr$ constitue un point $P_{Mr2}$.

La distance de « Mahalanobis » $DM_{PMr2}$ de ce point $P_{Mr2}$ est un second seuil d'alarme $Sa_2$. L'intersection entre cette seconde droite $Z_2$ et le second seuil de détection $Sd_2$ constitue un point $P_{Sd2}$. La distance de « Mahalanobis » $DM_{PMr2}$ est supérieure à la distance de « Mahalanobis » $DM_{PSd2}$ de ce point $P_{Sd2}$ correspondant au second seuil de détection $S_{d1}$. De fait, le critère d'appartenance d'un second point de fonctionnement caractéristique $Pf_2$ situé sur la seconde droite $Z_2$, qui est la distance de « Mahalanobis » $D_{M2}$, peut être inférieur au second seuil d'alarme $Sa_2$ tout en étant supérieur ou égal à la distance de « Mahalanobis » $DM_{PSd2}$ de ce point $P_{Sd2}$ correspondant au second seuil de détection $Sd_2$. Il y a donc incohérence entre le second seuil d'alarme $Sa_2$ et le second seuil de détection $Sd_2$. L'indicateur fusionné $HI$ ne doit donc pas être égal au critère d'appartenance dans ce cas pour supprimer cet incohérence.

Pour conserver une cohérence entre le seuil d'alarme $Sa$ et les seuils de détection $Sd_1, Sd_2$, l'indicateur fusionné $HI$ doit être égal au second seuil d'alarme $Sa_2$ lorsque le second indicateur de surveillance $Ind_2$ est égal au second seuil de détection $Sd_2$. De plus, afin de conserver une continuité de la transformation $T$ et éviter également des variations brutales et des sauts abrupts sur cette transformation $T$, l'indicateur fusionné $HI$ ne doit pas seulement être égal au second seuil d'alarme $Sa_2$ dès que le second indicateur de surveillance $Ind_2$ est égal au second seuil de détection $Sd_2$, mais l'indicateur fusionné $HI$ doit varier de façon continue et progressive jusqu'à être égal au second seuil d'alarme $Sa_2$ lorsque le second indicateur de surveillance $Ind_2$ est égal au second seuil de détection $Sd_2$. Par ailleurs, l'indicateur fusionné $HI$ doit continuer de varier au-delà de ce second seuil d'alarme $Sa_2$. L'indicateur fusionné $HI$ est de préférence proportionnel au critère d'appartenance défini par la fonction d'appartenance $f$. Par exemple, un coefficient multiplicateur $E$ est appliqué au critère d'appartenance et est égal au rapport entre la distance de « Mahalanobis » $DM_{PMr2}$ de ce point $P_{Mr2}$ correspondant au second seuil d'alarme $Sa_2$ et la distance de « Mahalanobis » $DM_{PSd2}$ de ce point $P_{Sd2}$ correspondant au second seuil de détection $Sd_2$ tel que

$$E = \frac{DM_{PMr2}}{DM_{PSd2}}.$$

En conséquence, pour toute droite passant par le centre $O$ du modèle représentatif $Mr$ et un point de fonctionnement caractéristique $Pf$ dont le seuil d'alarme $Sa$ formé par l'intersection de cette droite et la frontière du modèle représentatif $Mr$ est supérieur à la distance de « Mahalanobis » d'un point intersection entre cette droite et au moins un seuil de détection $Sd_i$, l'indicateur fusionné $HI$ est alors proportionnel au critère d'appartenance, le coefficient multiplicateur appliqué au critère d'appartenance étant égal au rapport du seuil *d'alarme Sa* par la distance de « Mahalanobis » correspondant à ce seuil de détection $Sd_i$.

Au cours de la troisième sous-étape 43, on compare cet indicateur fusionné $HI$ ainsi déterminé au seuil d'alarme $Sa$.

Enfin, au cours de la quatrième sous-étape 44, on déduit de cette comparaison un état de fonctionnement de ce dispositif 3,4.

Selon l'hypothèse initiale d'un seuil d'alarme $Sa$ maximum, le dispositif 3,4 est considéré comme sain tant que l'indicateur fusionné $HI$ est inférieur au seuil d'alarme $Sa$. Par contre, si cet indicateur fusionné $HI$ est supérieur ou égal au seuil d'alarme $Sa$, la présence d'un défaut ou bien le risque d'apparition d'un défaut est détecté pour ce dispositif 3,4. Une alarme par exemple visuelle et/ou sonore peut alors être signifiée à un opérateur et notamment au pilote de l'aéronef 1 à voilure tournante.

La figure 6 représente graphiquement un exemple de fonction d'appartenance $f$ en corrélation avec une densité de probabilité $d$ ainsi qu'une transformation $T$ de cette fonction d'appartenance $f$. Les ordonnées des courbes représentant la fonction d'appartenance $f$ et la transformation $T(f)$ sont respectivement le critère d'appartenance et l'indicateur fusionné $HI$. L'abscisse de ces courbes est, par exemple dans le cas d'une fonction gaussienne multidimensionnelle, une combinaison linéaire des indicateurs de surveillance $Indi$ préalablement centrés. Sur ce graphique de la figure 6 est également représentée la transformation $T(d)$ appliquée à la densité de probabilité $d$.

La courbe représentant la fonction d'appartenance $f$ comporte deux points $P_{Mr2}$ et $P_{Sd2}$. Le point $P_{Mr2}$ correspond à un point de fonctionnement caractéristique situé sur la frontière du modèle représentatif $Mr$, c'est-à-dire dont le critère d'appartenance est égal au seuil d'alarme $Sa$ du modèle représentatif $Mr$. Le point $P_{Sd2}$ correspond quand à lui à un point fonctionnel caractéristique dont l'indicateur de surveillance $Ind_2$ est égal au seuil de détection $Sd_2$. On constate que le critère d'appartenance du point $P_{Sd2}$ relatif au seuil de détection $Sd_2$ est inférieur à celui du point $P_{Mr2}$ correspondant au seuil d'alarme $Sa$. De fait, l'indicateur fusionné $HI$ déterminé par la transformation $T$ de cette fonction d'appartenance $f$ doit avoir une valeur égale au seuil d'alarme $Sa$ pour ce critère d'appartenance du point $P_{Sd2}$ relatif au seuil de détection $Sd_2$. Le point $P_{Mr2}$ se trouvant sur la fonction d'appartenance $f$ est ainsi transformé en un point $P'_{Sd2}$ se trouvant sur la transformation $T(f)$ de la fonction d'appartenance $f$. De la sorte, la transformation $T(f)$ de cette fonction d'appartenance $f$ définit un indicateur fusionné $HI$ égal au seuil *d'alarme Sa* pour le point $P_{Sd2}$. Les points $P_{Mr2}$, $P_{Sd2}$, $P'_{Sd2}$ sont également représentés sur les courbes de densité de probabilité $d$ et de la transformation $T(d)$ de la densité de probabilité $d$.

Il est ainsi également possible de déterminer les indicateurs fusionnés $HI$ en appliquant tout d'abord la transformation $T$ sur la densité de probabilité $d$ et ensuite de calculer ces indicateurs fusionnés $HI$ en utilisant la fonction d'appartenance $f$ appliquée au résultat préalablement obtenu.

On constate sur la figure 6 que les écarts entre la transformation $T(f)$ et la fonction d'appartenance $f$ sont faibles afin que la transformation $T(f)$ soit représentative de la fonction d'appartenance $f$ et permette de déterminer efficacement et précisément la présence d'un défaut ou bien un risque d'apparition d'un défaut sur le dispositif 3,4. De plus, les variations de la transformation de $T(f)$ sont proches de celle de la fonction d'appartenance $f$ et ne comporte aucune variation brutale ni aucun saut abrupt qui pourraient être assimilables à la présence d'un défaut. En outre, la fonction d'appartenance $f$ étant continue, la transformation $T$ est également continue.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, il a été considéré dans l'ensemble de la description et sur les figures que les seuils de détection $Sd_i$ et le seuil d'alarme $Sa$ sont des seuils maximums. Cependant, les seuils de détection $Sd_i$ et le seuil d'alarme $Sa$ peuvent également être un seuil minimum ou bien un seuil double formé d'une limite inférieure et d'une limite supérieure constituant ainsi un intervalle. Ces seuils de détection $Sd_i$ et le seuil d'alarme $Sa$ peuvent également être un seuil appris ou bien un seuil glissant.

## Revendications

1. Procédé de fusion d'indicateurs de surveillance d'un dispositif (3,4), des capteurs (101,102,103) de mesures étant positionnés sur ledit dispositif (3,4) et/ou à proximité dudit dispositif (3,4), des mesures d'au moins un desdits capteurs (101,102,103) permettant de déterminer au moins un indicateur de surveillance $Ind_i$, chaque indicateur de surveillance $Ind_i$ étant associé à un seuil de détection $Sd_i$,
au cours duquel

   - au cours d'une étape préliminaire (10), on répartit lesdits indicateurs de surveillance $Ind_i$ dudit dispositif (3,4) dans au moins un groupe d'indicateurs $G$, un algorithme $g$ étant appliqué auxdits indicateurs de surveillance $Ind_i$ d'un groupe d'indicateurs $G$ pour déterminer un point de fonctionnement caractéristique $Pf$ dudit dispositif (3,4) pour ledit groupe d'indicateurs $G$,
   - au cours d'une étape d'apprentissage (20), on détermine un modèle représentatif $Mr$ de l'état sain dudit dispositif (3,4), une fonction d'appartenance $f$ d'un point de fonctionnement caractéristique $Pf$ dudit dispositif (3,4) audit modèle représentatif $Mr$ de l'état sain dudit dispositif (3,4) pour ledit groupe d'indicateurs G ainsi qu'un seuil *d'alarme* $Sa$ associé à ladite fonction d'appartenance $f$ à partir de points de fonctionnement d'apprentissage,
   **caractérisé en ce que**
   - au cours d'une étape de prise en compte des seuils de détection $Sd_i$ (30), on détermine une transformation $T$ de ladite fonction d'appartenance $f$ afin de prendre en compte d'une part ledit seuil d'alarme $Sa$ dudit modèle représentatif $Mr$ et d'autre part lesdits seuils de détection $Sd_i$ desdits indicateurs de surveillance $Ind_i$ dudit groupe $G$,
   - au cours d'une étape de surveillance (40),

     ◦ on détermine lesdits indicateurs de surveillance $Ind_i$ d'un groupe d'indicateurs $G$,
     ◦ on détermine ledit indicateur fusionné $HI$ en appliquant ladite transformation $T$ auxdits indicateurs de surveillance $Ind_i$ d'un groupe d'indicateurs $G$,
     ◦ on compare ledit indicateur fusionné $HI$ audit seuil d'alarme $Sa$ et
     ◦ on en déduit un état de fonctionnement dudit dispositif (3,4).

2. Procédé selon la revendication 1,
   **caractérisé en ce qu'**au cours de ladite étape d'apprentissage (20),

   - on détermine des indicateurs de surveillance d'apprentissage dudit groupe d'indicateurs G pour un dispositif (3,4) sain,
   - on détermine un point de fonctionnement d'apprentissage dudit dispositif (3,4) en appliquant auxdits indicateurs de surveillance d'apprentissage dudit groupe d'indicateurs G ledit algorithme g,
   - on détermine ledit modèle représentatif $Mr$ de l'état sain dudit dispositif (3,4) pour ledit groupe d'indicateurs $G$ à partir desdits points de fonctionnement d'apprentissage,

- on détermine ladite fonction d'appartenance *f* d'un point de fonctionnement caractéristique *Pf* dudit dispositif (3,4) audit modèle représentatif *Mr* de l'état sain dudit dispositif (3,4) pour ledit groupe d'indicateurs *G* à partir desdits points de fonctionnement d'apprentissage et,

- on détermine ledit seuil d'alarme *Sa* associé à ladite fonction d'appartenance *f*, ledit seuil d'alarme *Sa* étant égal à un critère d'appartenance d'un point de fonctionnement limite se trouvant sur une frontière dudit modèle représentatif *Mr,* ledit critère d'appartenance étant déterminé en appliquant ladite fonction d'appartenance *f* auxdits indicateurs de surveillance *Ind$_i$* correspondant audit point de fonctionnement caractéristique limite pour ledit groupe d'indicateurs G.

3.  Procédé selon l'une quelconque des revendications 1 à 2,
    **caractérisé en ce que**, pour déterminer un indicateur de surveillance *Ind$_i$* dudit dispositif (3,4), on acquiert tout d'abord au moins une mesure desdits capteurs (101,102,103), puis on calcule ledit indicateur de surveillance *Ind$_i$* en fonction desdites mesures.

4.  Procédé selon l'une quelconque des revendications 1 à 3,
    **caractérisé en ce que** ladite transformation *T* de ladite fonction d'appartenance *f* est continue lorsque ladite fonction d'appartenance *f* est continue.

5.  Procédé selon l'une quelconque des revendications 1 à 4,
    **caractérisé en ce que** chaque dérivée partielle d'ordre *q* de ladite transformation *T* doit être bornée sur son domaine de définition, *q* étant un nombre entier positif supérieur ou égal à 1.

6.  Procédé selon l'une quelconque des revendications 1 à 5,
    **caractérisé en ce que** si ladite fonction d'appartenance *f* est de classe *C$^q$*, alors ladite transformation *T* est au moins de classe *Cm, m* et *q* étant des nombres entiers positifs supérieurs ou égaux à 0 avec *m* inférieur ou égal à *q*, une fonction étant de classe *C$^q$* lorsque cette fonction est *q* fois dérivable et que ces dérivées sont continues.

7.  Procédé selon l'une quelconque des revendications 1 à 6,
    **caractérisé en ce que** ladite transformation *T* est déterminée en minimisant un écart entre ladite transformation *T* appliquée à ladite fonction d'appartenance *f* et ladite fonction d'appartenance *f.*

8.  Procédé selon l'une quelconque des revendications 1 à 7,
    **caractérisé en ce que** ledit modèle représentatif de l'état sain dudit dispositif (3,4) est constitué d'une fonction gaussienne multidimensionnelle.

9.  Procédé selon l'une quelconque des revendications 1 à 7,
    **caractérisé en ce que** ledit modèle représentatif de l'état sain dudit dispositif (3,4) est constitué d'une superposition de fonctions gaussiennes multidimensionnelles.

10. Procédé selon la revendication 9,
    **caractérisé en ce que** chaque fonction gaussienne multidimensionnelle est associée à un coefficient de pondération.

11. Procédé selon l'une quelconque des revendications 1 à 10,
    **caractérisé en ce que** ladite fonction d'appartenance *f* est fonction d'une densité de probabilité dudit modèle représentatif *Mr* de l'état sain dudit dispositif (3,4) permettant de caractériser la position dudit point de fonctionnement caractéristique *Pf* dudit dispositif (3,4) par rapport à une frontière dudit modèle représentatif.

12. Procédé selon l'une quelconque des revendications 1 à 10,
    **caractérisé en ce que** ladite fonction d'appartenance *f* est une distance entre ledit point de fonctionnement caractéristique *Pf* et le centre dudit modèle représentatif *Mr* de l'état sain dudit dispositif (3,4).

13. Procédé selon la revendication 12,
    **caractérisé en ce que** ladite distance est déterminée par la distance de « Mahalanobis ».

14. Procédé selon l'une quelconque des revendications 1 à 13,
    **caractérisé en ce que**, pour un point de fonctionnement caractéristique *Pf* dont ledit critère d'appartenance est inférieur ou égal audit seuil d'alarme *Sa* et que lesdits critères d'appartenance correspondant auxdits seuils de détection *Sd$_i$* dans un voisinage dudit point de fonctionnement caractéristique *Pf* sont supérieurs audit seuil d'alarme

*Sa,* ledit indicateur fusionné *HI* est égal audit critère d'appartenance alors que, si ledit critère d'appartenance correspondant à au moins un desdits seuils de détection *Sd$_i$* dans ledit voisinage dudit point de fonctionnement caractéristique *Pf* est inférieur ou égal audit seuil d'alarme Sa, ledit indicateur fusionné *HI* est proportionnel audit critère d'appartenance, un coefficient multiplicateur étant appliqué audit critère d'appartenance et égal au rapport entre ledit seuil d'alarme *Sa* et un critère d'appartenance correspondant audit seuil de détection *Sd$_i$.*

15. Procédé selon l'une quelconque des revendications 12 à 13,
   **caractérisé en ce que** pour tout point de fonctionnement caractéristique *Pf* situé sur une droite passant par ledit centre dudit modèle représentatif *Mr* et un point de fonctionnement caractéristique limite situé sur la frontière dudit modèle représentatif *Mr* est égal audit seuil d'alarme *Sa,* si ledit critère d'appartenance correspondant à chaque seuil de détection *Sdi* est supérieur audit seuil d'alarme *Sa,* ledit indicateur fusionné *HI* est égal audit critère d'appartenance alors que si ledit critère d'appartenance correspondant à au moins un seuil de détection *Sdi* est inférieur ou égal audit seuil d'alarme *Sa,* ledit indicateur fusionné *HI* est proportionnel audit critère d'appartenance, un coefficient multiplicateur étant appliqué audit critère d'appartenance et égal au rapport entre ledit seuil d'alarme *Sa* et un critère d'appartenance correspondant audit seuil de détection *Sd$_i$.*

16. Système de fusion (5) d'indicateurs de surveillance d'un dispositif (3,4), des capteurs (101,102,103) de mesures étant positionnés sur ledit dispositif (3,4) et/ou à proximité dudit dispositif (3,4), ledit système de fusion (5) comportant :

   - un moyen de centralisation (120) muni d'au moins un calculateur central (121) et d'au moins une mémoire principale (122),
   - un système d'acquisition (110) des mesures desdits capteurs (101,102,103), et
   - au moins un moyen de transfert (130) entre ledit système d'acquisition (120) et ledit moyen de centralisation (130),
   **caractérisé en ce que** ledit système de fusion (5) est capable de mettre en oeuvre le procédé selon l'une quelconque des revendications 1 à 15.

**Patentansprüche**

1. Verfahren zur Zusammenführung von Überwachungsindikatoren einer Vorrichtung (3, 4), wobei Messfühler (101, 102, 103) auf der Vorrichtung (3, 4) und/oder in der Nähe der Vorrichtung (3, 4) positioniert sind, wobei Messungen mindestens eines der Messfühler (101, 102, 103) es erlauben, mindestens einen Überwachungsindikator *Ind$_i$* zu bestimmen, wobei jeder Überwachungsindikator *Ind$_i$* mit einem Überwachungsschwellenwert *Sd$_i$* verbunden ist, in dessen Verlauf:

   - während eines vorläufigen Schrittes (10) die Überwachungsindikatoren *Indi* der Vorrichtung (3, 4) in mindestens einer Indikatorengruppen *G* verteilt werden, wobei ein Algorithmus *g* auf die Überwachungsindikatoren *Ind$_i$* einer Indikatorengruppe *G* angewandt wird, um einen charakteristischen Betriebspunkt *Pf* der Vorrichtung (3, 4) für die Indikatorengruppe *G* zu bestimmen,
   - während eines Lernschrittes (20) ein repräsentatives Modell *Mr* des Betriebsfähigkeitszustands der Vorrichtung (3, 4), eine Zugehörigkeitsfunktion *f* eines charakteristischen Betriebspunktes *Pf* der Vorrichtung (3, 4) an dem repräsentativen Modell *Mr* des Betriebstüchtigkeitszustands der Vorrichtung (3, 4) für die Indikatorengruppe *G,* sowie ein Alarmschwellenwert *Sa,* der mit der Zugehörigkeitsfunktion *f* ausgehend von Lernbetriebspunkten verbunden ist, bestimmt wird,
   **dadurch gekennzeichnet, dass**
   - während eines Schrittes der Berücksichtigung von Erfassungsschwellenwerten *Sd$_i$* (30) eine Transformation *T* der Zugehörigkeitsfunktion *f* bestimmt wird, um einerseits den Alarmschwellenwert *Sa* des repräsentativen Modells *Mr* und andererseits die Erfassungsschwellenwerte *Sd$_i$* der Überwachungsindikatoren *Ind$_i$* der Gruppe *G* zu berücksichtigen,
   - während eines Überwachungsschrittes (40)

      o die Überwachungsindikatoren *Indi* einer Indikatorengruppe *G* bestimmt werden,
      o der zusammengeführte Indikator *HI* bestimmt wird, indem die Transformation *T* auf die Überwachungsindikatoren *Ind$_i$* einer Indikatorengruppe *G* angewendet wird,
      o der zusammengeführte Indikator *HI* mit dem Alarmschwellenwert *Sa* verglichen wird und
      o daraus ein Betriebszustand der Vorrichtung (3, 4) abgeleitet wird.

**2.** Verfahren nach Anspruch 1,
**dadurch gekennzeichnet, dass** während des Lernschritts (20)

- Lernüberwachungsindikatoren der Indikatorengruppe $G$ für eine betriebstüchtige Vorrichtung (3, 4) bestimmt werden,
- ein Lernbetriebspunkt der Vorrichtung (3, 4) bestimmt wird, indem der Algorithmus $g$ auf die Lernüberwachungsindikatoren der Indikatorengruppe $G$ angewendet wird,
- das repräsentative Modell $Mr$ des Betriebstüchtigkeitszustands der Vorrichtung (3, 4) für die Indikatorengruppe $G$ ausgehend von den Lernbetriebspunkten bestimmt wird,
- die Zugehörigkeitsfunktion $f$ eines charakteristischen Betriebspunktes $Pf$ der Vorrichtung (3, 4) an dem repräsentativen Modell $Mr$ des Betriebstüchtigkeitszustands der Vorrichtung (3, 4) für die Indikatorengruppe $G$ ausgehend von den Lernbetriebspunkten bestimmt wird, und
- der mit der Zugehörigkeitsfunktion $f$ verbundene Alarmschwellenwert $Sa$ bestimmt wird, wobei der Alarmschwellenwert $Sa$ gleich einem Zugehörigkeitskriterium eines Grenzbetriebspunktes ist, der sich auf einer Grenze des repräsentativen Modells $Mr$ befindet, wobei das Zugehörigkeitskriterium bestimmt wird, indem die Zugehörigkeitsfunktion $f$ auf Überwachungsindikatoren $Ind_i$ angewandt wird, die dem Grenzwert des charakteristischen Betriebspunktes für die Indikatorengruppe $G$ entsprechen.

**3.** Verfahren nach einem der Ansprüche 1 bis 2,
**dadurch gekennzeichnet, dass** zur Bestimmung eines Überwachungsindikators $Ind_i$ der Vorrichtung (3, 4) zuerst mindestens eine Messung der Fühlen (101, 102, 103) erfasst wird, und dann der Überwachungsindikator $Ind_i$ in Abhängigkeit von den Messungen berechnet wird.

**4.** Verfahren nach einem der Ansprüche 1 bis 3,
**dadurch gekennzeichnet, dass** die Transformation $T$ der Zugehörigkeitsfunktion $f$ stetig ist, wenn die Zugehörigkeitsfunktion $f$ stetig ist.

**5.** Verfahren nach einem der Ansprüche 1 bis 4,
**dadurch gekennzeichnet, dass** jede partielle Ableitung der Ordnung q der Transformation $T$ auf ihren Definitionsbereich beschränkt sein muss, wobei $q$ eine ganze positive Zahl größer oder gleich 1 ist.

**6.** Verfahren nach einem der Ansprüche 1 bis 5,
**dadurch gekennzeichnet, dass**, wenn die Zugehörigkeitsfunktion $f$ zu der Klasse $C^q$ gehört, die Transformation $T$ mindestens zu der Klasse $C^m$ gehört, wobei $m$ und $q$ ganze positive Zahlen größer oder gleich 0 sind, wobei $m$ kleiner oder gleich $q$ ist, wobei eine Funktion zu der Klasse $C^q$ gehört, wenn diese Funktion $q$-mal ableitbar ist und die Ableitungen stetig sind.

**7.** Verfahren nach einem der Ansprüche 1 bis 6,
**dadurch gekennzeichnet, dass** die Transformation $T$ bestimmt wird, indem ein Unterschied zwischen der Transformation $T$, die auf die Zugehörigkeitsfunktion $f$ angewandt wird, und der Zugehörigkeitsfunktion $f$ minimiert wird.

**8.** Verfahren nach einem der Ansprüche 1 bis 7,
**dadurch gekennzeichnet, dass** das repräsentative Modell des Betriebstüchtigkeitszustands der Vorrichtung (3, 4) aus einer mehrdimensionalen Gaußfunktion besteht.

**9.** Verfahren nach einem der Ansprüche 1 bis 7,
**dadurch gekennzeichnet, dass** das repräsentative Modell des Betriebstüchtigkeitszustands der Vorrichtung (3, 4) aus einer Überlagerung mehrdimensionaler Gaußfunktionen besteht.

**10.** Verfahren nach Anspruch 9,
dadurch gekennzeichet, dass jede mehrdimensionale Gaußfunktion mit einem Wichtungskoeffizienten verbunden ist.

**11.** Verfahren nach einem der Ansprüche 1 bis 10,
**dadurch gekennzeichnet, dass** die Zugehörigkeitsfunktion $f$ eine Funktion einer Wahrscheinlichkeitsdichte des repräsentativen Modells $Mr$ des Betriebstüchtigkeitszustands der Vorrichtung (3, 4) ist, welche es erlaubt, die Position des charakteristischen Betriebspunktes $Pf$ der Vorrichtung (3, 4) im Verhältnis zu einer Grenze des repräsentativen Modells zu charakterisieren.

**12.** Verfahren nach einem der Ansprüche 1 bis 10,
**dadurch gekennzeichnet, dass** die Zugehörigkeitsfunktion *f* ein Abstand zwischen dem charakteristischen Betriebspunkt *Pf* und der Mitte des repräsentativen Modells *Mr* des Betriebstüchtigkeitszustands der Vorrichtung (3, 4) ist.

**13.** Verfahren nach Anspruch 12,
**dadurch gekennzeichnet, dass** der Abstand durch den "Mahalanobis"-Abstand bestimmt wird.

**14.** Verfahren nach einem der Ansprüche 1 bis 13,
**dadurch gekennzeichnet, dass** für einen charakteristischen Betriebspunkt *Pf,* dessen Zugehörigkeitskriterium kleiner oder gleich dem Alarmschwellenwert *Sa* ist - wobei die Zugehörigkeitskriterien, die den Erfassungsschwellenwerten *Sd_i* in der Nähe des charakteristischen Betriebspunktes *Pf* entsprechen, größer sind als der Alarmschwellenwert *Sa* - der zusammengeführte Indikator *HI* gleich dem Zugehörigkeitskriterium ist, während, wenn das Zugehörigkeitskriterium, das mindestens einem der Erfassungsschwellenwerte *Sd_i* in der Nähe des charakteristischen Betriebspunktes *Pf* entspricht, kleiner oder gleich dem Alarmschwellenwert *Sa* ist, der zusammengeführte Indikator *HI* proportional zu dem Zugehörigkeitskriterium ist, wobei ein Multiplikationskoeffizient auf das Zugehörigkeitskriterium angewendet wird und gleich dem Verhältnis zwischen dem Alarmschwellenwert *Sa* und einem Zugehörigkeitskriterium ist, das dem Erfassungsschwellenwert *Sd_i* entspricht.

**15.** Verfahren nach einem der Ansprüche 12 bis 13,
**dadurch gekennzeichnet, dass** für jeden charakteristischen Betriebspunkt *Pf,* der auf einer Geraden liegt, die durch die Mitte des repräsentativen Modells *Mr* verläuft - wobei ein charakteristischer Grenzbetriebswert, der auf der Grenze des repräsentativen Modells *Mr* liegt, gleich dem Alarmschwellenwert *Sa* ist - der zusammengeführte Indikator *HI* gleich dem Zugehörigkeitskriterium ist, wenn das Zugehörigkeitskriterium, das jedem Erfassungsschwellenwert *Sd_i* entspricht, größer als der Alarmschwellenwert *Sa* ist, während, wenn das Zugehörigkeitskriterium, das mindestens einem Erfassungsschwellenwert *Sd_i* entspricht, kleiner oder gleich dem Alarmschwellenwert *Sa* ist, der zusammengeführte Indikator *HI* proportional zu dem Zugehörigkeitskriterium ist, wobei ein Multiplikations-koeffizient auf das Zugehörigkeitskriterium angewandt wird und gleich dem Verhältnis zwischen dem Alarmschwellenwert *Sa* und einem Zugehörigkeitskriterium ist, das dem Erfassungsschwellenwert *Sd_i* entspricht.

**16.** System (5) zur Zusammenführung von Überwachungsindikatoren einer Vorrichtung (3, 4), wobei Messfühler (101, 102, 103) auf der Vorrichtung (3, 4) und/oder in der Nähe der Vorrichtung (3, 4) positioniert sind, wobei das Zusammenführungssystem (5) aufweist:

- mindestens ein Zentralisierungsmittel (120), das mit mindestens einem Zentralrechner (121) und mindestens einem Hauptspeicher (122) versehen ist,
- ein System (110) zum Sammeln von Messungen der Messfühler (101, 102, 103), und
- mindestens ein Übertragungsmittel (130) zwischen dem System zum Sammeln (120) und dem Zentralisierungsmittel (130),
**dadurch gekennzeichnet, dass** das Zusammenführungssystern (5) das Verfahren nach einem der Ansprüche 1 bis 15 ausführen kann.

**Claims**

**1.** Method for merging monitoring indicators of a device (3,4), measurement sensors (101,102,103) being positioned on said device (3,4) and/or close to said device (3,4), measurements of at least one of said sensors (101,102,103) making it possible to determine at least one monitoring indicator *Ind_i,* each monitoring indicator *Ind_i* being associated with a detection threshold *Sd_i,*
during which

- during a preliminary step (10), said monitoring indicators *Ind_i* of said device (3,4) are distributed in at least one group of indicators *G,* an algorithm *g* being applied to said monitoring indicators *Ind_i* of a group of indicators *G* in order to determine a characteristic operating point *Pf* of said device (3,4) for said group of indicators *G,*
- during a training step (20), there are determined a representative model *Mr* of the healthy state of said device (3,4), a belonging function *f* of a characteristic operating point *Pf* of said device (3,4) to said representative model *Mr* of the healthy state of said device (3,4) for said group of indicators *G,* and also an alarm threshold *Sa* associated with said belonging function *f* based on training operating points,

**characterised in that**
- during a step of taking account of the detection thresholds $Sd_i$ (30), a transformation $T$ of said belonging function $f$ is determined so as to take into account on the one hand said alarm threshold $Sa$ of said representative model $Mr$ and on the other hand said detection thresholds $Sd_i$ of said monitoring indicators $Ind_i$ of said group G,
- during a monitoring step (40),

   o said monitoring indicators $Ind_i$ of a group of indicators $G$ are determined,
   o said merged indicator $HI$ is determined by applying said transformation $T$ to said monitoring indicators $Ind_i$ of a group of indicators $G$,
   o said merged indicator $HI$ is compared with said alarm threshold $Sa$ and
   o an operating state of said device (3,4) is deduced therefrom.

2. Method according to claim 1,
   **characterised in that** during said training step (20),

   - training monitoring indicators of said group of indicators $G$ for a healthy device (3,4) are determined,
   - a training operating point of said device (3,4) is determined by applying said algorithm g to said training monitoring indicators of said group of indicators $G$,
   - said representative model $Mr$ of the healthy state of said device (3,4) is determined for said group of indicators $G$ based on said training operating points,
   - said belonging function f of a characteristic operating point $Pf$ of said device (3,4) to said representative model $Mr$ of the healthy state of said device (3,4) is determined for said indicator group G based on said training operating points and,
   - said alarm threshold $Sa$ associated with said belonging function $f$ is determined, said alarm threshold $Sa$ being equal to a belonging criterion of a limit operating point located on a boundary of said representative model $Mr$, said belonging criterion being determined by applying said belonging function $f$ to said monitoring indicators $Ind_i$ corresponding to said limit characteristic operating point for said group of indicators $G$.

3. Method according to any one of claims 1 to 2,
   **characterised in that**, in order to determine a monitoring indicator $Ind_i$ of said device (3,4), firstly at least one measurement of said sensors (101,102,103) is acquired, and then said monitoring indicator $Ind_i$ is calculated as a function of said measurements.

4. Method according to any one of claims 1 to 3,
   **characterised in that** said transformation $T$ of said belonging function $f$ is continuous when said belonging function $f$ is continuous.

5. Method according to any one of claims 1 to 4,
   **characterised in that** each partial derivative of order $q$ of said transformation $T$ must be bounded over its definition domain, $q$ being a positive integer greater than or equal to 1.

6. Method according to any one of claims 1 to 5,
   **characterised in that** if said belonging function $f$ is of class $C^q$, then said transformation $T$ is at least of class $C^m$, $m$ and $q$ being positive integers greater than or equal to 0 with $m$ less than or equal to $q$, a function being of class $C^q$ when this function is $q$ times differentiable and these derivatives are continuous.

7. Method according to any one of claims 1 to 6,
   **characterised in that** said transformation $T$ is determined by minimising a difference between said transformation $T$ applied to said belonging function $f$ and said belonging function $f$.

8. Method according to any one of claims 1 to 7,
   **characterised in that** said representative model of the healthy state of said device (3,4) is constituted by a multidimensional Gaussian function.

9. Method according to any one of claims 1 to 7,
   **characterised in that** said representative model of the healthy state of said device (3,4) is constituted by a superposition of multidimensional Gaussian functions.

**10.** Method according to claim 9,
   **characterised in that** each multidimensional Gaussian function is associated with a weighting coefficient.

**11.** Method according to any one of claims 1 to 10,
   **characterised in that** said belonging function $f$ is a function of a probability density of said representative model $Mr$ of the healthy state of said device (3,4) making it possible to characterise the position of said characteristic operating point $Pf$ of said device (3,4) relative to a boundary of said representative model.

**12.** Method according to any one of claims 1 to 10,
   **characterised in that** said belonging function $f$ is a distance between said characteristic operating point $Pf$ and the centre of said representative model $Mr$ of the healthy state of said device (3,4).

**13.** Method according to claim 12,
   **characterised in that** said distance is determined by the "Mahalanobis" distance.

**14.** Method according to any one of claims 1 to 13,
   **characterised in that**, for a characteristic operating point $Pf$ of which said belonging criterion is less than or equal to said alarm threshold $Sa$ and said belonging criteria corresponding to said detection thresholds $Sd_i$ in a neighbourhood of said characteristic operating point $Pf$ are greater than said alarm threshold $Sa$, said merged indicator $HI$ is equal to said belonging criterion, whereas, if said belonging criterion corresponding to at least one of said detection thresholds $Sd_i$ in said neighbourhood of said characteristic operating point $Pf$ is less than or equal to said alarm threshold $Sa$, said merged monitoring indicator $HI$ is proportional to said belonging criterion, a multiplier coefficient being applied to said belonging criterion and equal to the ratio between said alarm threshold $Sa$ and a belonging criterion corresponding to said detection threshold $Sd_i$.

**15.** Method according to any one of claims 12 to 13,
   **characterised in that** for any characteristic operating point $Pf$ situated on a straight line passing through said centre of said representative model $Mr$ and a limit characteristic operating point situated on the boundary of said representative model $Mr$ is equal to said alarm threshold $Sa$, if said belonging criterion corresponding to each detection threshold $Sdi$ is greater than said alarm threshold $Sa$, said merged indicator $HI$ is equal to said belonging criterion, whereas if said belonging criterion corresponding to at least one detection threshold $Sdi$ is less than or equal to said alarm threshold $Sa$, said merged indicator $HI$ is proportional to said belonging criterion, a multiplier coefficient being applied to said belonging criterion and equal to the ratio between said alarm threshold $Sa$ and a belonging criterion corresponding to said detection threshold $Sd_i$.

**16.** System for merging (5) monitoring indicators of a device (3,4), measuring sensors (101,102,103) being positioned on said device (3,4) and/or close to said device (3,4), said system for merging (5) comprising:

   - a centralisation means (120) provided with at least one central computer (121) and at least one main memory (122),
   - an acquisition system (110) for acquiring measurements from said sensors (101,102,103), and
   - at least one transfer means (130) for transfer between said acquisition system (120) and said centralisation means (130),
   **characterised in that** said system for merging (5) is capable of implementing the method according to any one of claims 1 to 15.

**Fig.1**

**Fig.2**

Fig.3

Fig.4

Fig.5

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050096873 A
- FR 2972025
- US 20090281735 A
- US 20110173496 A
- US 20080082299 A
- EP 2204778 A
- US 6564119 B
- US 20140149325 A
- US 20080208487 A